# EUROPEAN PATENT APPLICATION

(11) **EP 4 636 564 A1**
(43) Date of publication of application: **22.10.2025**
(21) Application number: 25171093.5
(22) Date of filing: 16.04.2025
(51) Int. Cl.: G06F 3/06, G06F 9/455

(54) **CONTAINERIZED CLOUD-NATIVE CLUSTER STORAGE TARGETS**

(30) Priority: 19.04.2024 IN 202441031353; 31.07.2024 US 202418791271; 16.05.2024 IN 202441038428; 18.05.2024 IN 202441039105
(71) Applicant: Nutanix, Inc., San Jose, California 95110 (US)
(72) Inventor: Shah, Veeral Prabodhchandra, 411027 Pune (IN); Patil, Sunil Khushal, 411027 Pune (IN); Jadhav, Shrikant Janardhan, 411014 Pune (IN); Joshi, Prasad Gajanan, 411043 Pune (IN); Bansal, Naveen, 335804 Suratgarh (IN); Patil, Tanmay Rajendra, 411028 Pune (IN); Singh, Anubhav, 560001 Bengaluru (IN); Joshi, Nilesh Ravindra, 411045 Pune (IN)
(74) Representative: Keller Schneider Patentanwaltsgesellschaft mbH

(57) **Abstract**

Methods, systems, and computer program products. For implementing a container-attached storage facility. A cloud-resident containerized control module is situated in a Kubernetes Pod. A plurality of storage devices are organized into a common access space and made accessible by the cloud-resident containerized control module. In operation, and responsive to receiving a storage I/O request referencing a portion of storage that is addressable via the common access space, the cloud-resident containerized control module redirects the storage I/O request to a storage device of the common access space. Some instances of storage I/Os are redirected toward a cloud-provided block storage facility. Some instances of storage I/Os are redirected to storage devices situated in an on-premises environment.

## Description

### TECHNICAL FIELD

This disclosure relates to computerized virtualization systems, and more particularly to techniques for making and using containerized cloud-native cluster storage targets.

### BACKGROUND

A record number of organizations today are using containers and Kubernetes to run their enterprise applications. The application container market size was valued at $2.76 billion in 2021 and is projected to reach $33.86 billion by 2030. Microservices, Kubernetes, and serverless infra-technologies are becoming more mainstream and ubiquitous. The Kubernetes application market growth is seen at 32% CAGR. More than 75% of enterprises plan to shift towards application containerization, and almost 96% of organizations are either evaluating or already using Kubernetes. In the rapidly evolving hybrid and multi-cloud landscape, there is rapid adoption of container-as-a-service platforms.

All significant public cloud providers offer hosted Kubernetes platforms. Amidst this evolving landscape, virtualization systems are still lagging under the now aging virtual machine regime - almost blithely unaware of the Kubernetes revolution. This lag is rooted in the sheer volume of technical challenges involved in migrating/porting from the virtual machine regime to the executable container regime.

There is a need to solve these technical challenges to catch up with the rapid adoption of Kubernetes. The problem to be solved is therefore rooted in various technological limitations of legacy virtual machine and hypervisor approaches. Improved technologies are needed.

### SUMMARY

This summary is provided to introduce a selection of concepts that are further described elsewhere in the written description and in the figures. This summary is not intended to identify key features or essential features of the claimed subject matter, nor is it intended to limit the scope of the claimed subject matter. Moreover, the individual embodiments of this disclosure each have several innovative aspects, no single one of which is solely responsible for any particular desirable attribute or end result.

The present disclosure describes techniques used in systems, methods, and computer program products for containerized cloud-native cluster storage targets, which techniques advance the relevant technologies to address technological issues with legacy approaches. More specifically, the present disclosure describes techniques used in systems, methods, and in computer program products for implementing a containerized virtualization system controller that is addressed via a storage target interface. Certain embodiments are directed to technological solutions for deploying a cluster node controller as a cloud-native executable container that functions as a storage target.

The disclosed embodiments modify and improve beyond legacy approaches. In particular, the herein-disclosed techniques provide technical solutions that address the technical problems attendant to providing cloud-native storage and self-service tools with centralized data management in a Kubernetes environment.

The ordered combination of steps of the embodiments serve in the context of practical applications that perform steps for deploying a cluster node controller as a cloud-native executable container that functions as a storage target more efficiently. As such, techniques for deploying a cluster node controller as a cloud-native executable container that functions as a storage target overcome long-standing yet heretofore unsolved technological problems associated with providing cloud-native storage and self-service tools with centralized data management in a Kubernetes environment.

Many of the herein-disclosed embodiments for deploying a cluster node controller as a cloud-native executable container that functions as a storage target are technological solutions pertaining to technological problems that arise in the hardware and software arts that underlie public cloud systems when used as infrastructure to support virtualization system deployments. Aspects of the present disclosure achieve performance and other improvements in peripheral technical fields including, but not limited to, network attached storage for computerized virtualization systems and executable container imaging.

Some embodiments include a sequence of instructions that are stored on a non-transitory computer readable medium. Such a sequence of instructions, when stored in memory and executed by one or more processors, causes the one or more processors to perform a set of acts for deploying a cluster node controller as a cloud-native executable container that functions as a storage target.

Some embodiments include the aforementioned sequence of instructions that are stored in a memory, which memory is interfaced to one or more processors such that the one or more processors can execute the sequence of instructions to cause the one or more processors to implement acts for deploying a cluster node controller as a cloud-native executable container that functions as a storage target.

In various embodiments, any combination of any of the above can be organized to perform any variation of acts for implementing a containerized virtualization system controller that is addressed via a storage target interface, and many such combinations of aspects of the above elements are contemplated.

Further, various combinations of any of the disclosed embodiments herein can be organized to perform any variation of acts for overseeing one or more computing clusters (e.g., Kubernetes computing clusters, virtualization system native clusters, cloud provided nodes that form computing clusters, etc. in any combination). Some such cluster overseer embodiments are configured as one or more executable containers that are able to execute on cloud-provided infrastructure so as to interface with (e.g., configure, command, monitor, remediate, destroy, etc.) any other type or instance of components of a containerized virtualization system. Some such cluster overseer embodiments are configured as an executable container that is able to execute concurrently with cloud-provided software infrastructure (e.g., on a cloud-provided host operating system, atop a cloud-provided hypervisor, using cloud-provided services, etc.) so as to interface with (e.g., configure, command, monitor, remediate, destroy, etc.) any/all components of a containerized virtualization system that is running on one or more nodes of the computing cluster. Moreover, some such cluster overseer embodiments are configured as executable containers that are able to execute concurrently-whether instanced on the same node or instanced on different node-so as to configure, command, monitor, remediate, or destroy, any one or more containerized virtualization system controllers that are configured as a storage target interface (e.g., an internet small computer system interface (iSCSI) target). Many such combinations of aspects of the above elements are contemplated.

Configuration of the Kubernetes clusters as discussed herein are facilitated by real-time creation of executable containers that run within a Kubernetes environment. Certain combinations of any of the various virtualization system components and/or certain specific implementations as disclosed herein may rely on real-time creation of executable containers based on a subject virtual machine and its underlying virtualization system components. Certain embodiments that implement real-time creation of executable containers from a virtual machine and its underlying virtualization system components output Docker images that function (e.g., within a Kubernetes cluster) either identically or similarly to the subject virtual machine. Some such executable images (e.g., Docker images) create a base image based at least in part on the subject virtual machine's file system.

A "virtual machine" or a "VM" refers to a specific software-based implementation of a machine in a virtualization environment, in which the hardware resources of a real computer (e.g., CPU, memory, etc.) are virtualized or transformed into the underlying support for the fully functional virtual machine that can run its own operating system and applications on the underlying physical resources just like a real computer.

Virtualization works by inserting a thin layer of software directly on the computer hardware or on a host operating system. This layer of software contains a virtual machine monitor or "hypervisor" that allocates hardware resources dynamically and transparently. Multiple operating systems run concurrently on a single physical computer and share hardware resources with each other. By encapsulating an entire machine, including CPU, memory, operating system, and network devices, a virtual machine is completely compatible with most standard operating systems, applications, and device drivers. Most modern implementations allow several operating systems and applications to safely run at the same time on a single computer, with each having access to the resources it needs when it needs them.

Disclosed herein are techniques for transforming a virtual machine (or other virtualization system components) into executable containers, and then (in some embodiments) instantiating such executable containers into a Kubernetes cluster.

In some embodiments, a cluster overseer is subjected to an overseer transformation so as to result in a containerized cluster overseer. In some cases, computing clusters that include multiple nodes demand management of those nodes, either individually or as a whole. As an example, one way to accomplish this in a computing cluster made up of Kubernetes nodes is to containerize an instance of a cluster overseer that derives from a virtual machine implementation of a virtualization system cluster overseer.

In some embodiments, a cluster overseer is implemented as a computer entity that handles distributed resource management so as to allow users to manage and monitor objects and services of the computing environment. As one example, a cluster overseer can be hosted locally, or in the cloud, or both. As such, capabilities include (1) handling interfacing to tools and protocols (e.g., HTML5 UI, REST API, CLI, PowerShell commands and/or commandlets, etc.) and (2) cluster component management capabilities (e.g., platform observation, virtual machine and/or container creation, probing, updating and deletion, policy definition establishment and compliance observation, service observations and status/analytics reporting, etc.). Certain implementations of a cluster overseer involve various partitioning into multiple components. Strictly as examples, a cluster overseer might involve a multi-cluster manager that provides a single, centralized management interface, while at the same time, any/all of the foregoing handling of distributed resource management is being carried out. To explain, and strictly as an example, a cluster overseer might be broken out into two concurrently executing components comprising (1) a multi-cluster overseer component (MCO) and (2) a single cluster overseer element (SCO).

A multi-cluster overseer component is responsible for managing multiple clusters to provide a single, centralized management facility. In some configurations, a cluster overseer is deployed as a software appliance that can be deployed on any node that hosts an operating system or at least some minimum set of operating system functionality. A single cluster overseer (SCO) provides cluster-local management. It can have a cluster-local user interface (e.g., operated from one of the nodes of a subject cluster), or it can roll-up its findings to an MCO.

Some multi-zone or otherwise distributed deployments involve more than one cluster or involve multiple sites. In such situations, an MCO can be configured to provide a single management UI that presents information pertaining all clusters or sites under the MCO's management. In an example configuration, a cluster overseer service (e.g., an MCO or an SCO) is enabled in every control virtual machine (or in an alternative, in every containerized controller). A leader is needed, and as such, there needs to be a leadership election process. This is because it often turns out that a single, one-and-only elected cluster overseer is tasked with the responsibility of handling HTTP requests. If the elected cluster overseer leader fails, a new cluster overseer leader will be elected. In the case that a CVM that is not the elected cluster overseer leader receives an HTTP request, its built-in protocol handler will redirect the HTTP request to the then-current cluster overseer leader (e.g., using an HTTP response status code).

In some situations, a cluster may experience a loss of functionality of a cluster overseer leader, and as such, the failed cluster overseer's IP address will be assumed by the newly elected cluster overseer leader and a gratuitous address resolution protocol (gARP) will be used to clean-out any stale ARP cache entries.

In some embodiments, a cluster overseer may support integrations with any one or more authentication mechanisms. Strictly as examples, an MCO or an SCO provides support for integrations with an active directory, an LDAP, a SAML, and/or a SAML with multi-factor authentication. Furthermore, a cluster overseer may support integrations with external identity providers (IDP) such as Okta, ADFS, Microsoft Authenticator, etc.

In some embodiments, a cluster overseer is used by infrastructure administrators to keep track of storage resources (e.g., volume groups (VGs)), policies, disaster recovery (DR) entities, VG-related stats, recovery points (RPs), etc.). This functionality extends into the Kubernetes domain in the sense that a cluster overseer is deployed to be able to observe and control a Kubernetes cluster, including worker nodes statistics and any events or conditions in or over an underlying virtualization system's operating system or containerized embodiment therefrom. A cluster overseer also monitors Kubernetes pods or other implementations of pods, as well as third party or foreign or vendor-specific clusters. Thus, at least in a cloud setting embodiment, there are advantages to running a cluster overseer natively using regular, non-bare metal (aka "non-metal") instances. Strictly as one example, "running natively" refers to running in an Amazon elastic compute cloud "EC2" setting on a non-metal instance.

In some embodiments, an Amazon Web Services (AWS) native cluster overseer can derive from a virtualization system's existing cluster overseer code base. As an example, the code base of the cluster overseer might be provided in a QEMU copy on write (QCOW) file format for disk image files used by a quick emulator (QEMU), and/or as a hosted virtual machine monitor. In either case the cluster overseer functionality can be converted to an EC2-compatible Amazon machine image (AMI) and then deployed to run this AMI using a standard non-metal EC2 instance. As such, the cluster overseer can be single- or multi-instance in a standard variety of sizes (e.g., small, medium, large). The same cluster overseer, for example, can be used to manage the Amazon elastic Kubernetes service (EKS), based clusters as well as any other type of cluster. As such, the cluster overseer can access storage, including any container microservices platform (CMSP) pods as well as for cluster overseer accessible local storage, and can be served out of elastic block storage (EBS) disks of any variety or billing model (e.g., GP2 or GP3).

In some situations, it is possible to use a cluster overseer to facilitate disaster recovery (DR), for example, using any variety of a scalable storage service (S3) for cluster overseer protection (e.g., against availability zone failure). The cluster overseer can be deployed in the customer's virtual private cloud (VPC), similarly as for any of a variety of managed services such as EKS, to run Kubernetes on AWS. In some embodiments a cluster overseer can be deployed as a single instance embodiment, or a cluster overseer can be deployed as a scaled-out cluster overseer (running on EC2 instances), either of which in turn can create, manage, and provision multiple computing clusters.

In some embodiments, the envisioned cluster overseer implements a cloud-borne control and management plane for a hyperconverged computing infrastructure (HCI), regardless of whether the infrastructure is virtualized or is cloud native. As such, there are advantages in having a facility to automatically create a cluster overseer image that can run natively using "regular" (i.e., non-metal) cloud-provided computing instances.

In some of the envisioned deployments (e.g., AWS deployments), a native cluster overseer system involves subcomponents. For example, a cluster overseer imaging system (and possibly a CI/CD system) that converts a QCOW image (of any variety) into an Amazon machine image for seamless integration into AWS. As such, for every successful cluster overseer build, a cluster overseer AMI can be created using appropriate EC2 instances such as "C5.12xlarge" (just as an example). Every cluster overseer size has a specific resource requirement. In some embodiments, the selection of the EC2 instance will depend on the cluster overseer resource sizing, and the use of either Terraform scripts or a CloudFormation template for deploying the cluster overseer cluster on an AWS infrastructure and a user-provided VPC. As an example, the script can be executed from the AWS marketplace or from a deployment portal hosted on an EC2 instance spun off from an AMI that's made available on the AWS marketplace.

In some embodiments, an implication may be that the application of any technique can be used to remove dependencies on the module's application programming interfaces (APIs), which might be used to fetch needed resource information such as network cards and subnets. Various architectures that implement a three-tier cluster overseer capability serves to remove the cluster overseer dependency and further, provides a pathway for the overseer to be deployed on a public cloud

In some embodiments, an implication may be container storage interface (CSI) driver replacement, specifically which technique replaces any CSI driver with a cloud-supported (e.g., cloud-native) driver that provides persistent storage to CMSP Pods with the AWS EBS CSI driver. This eliminates certain dependencies as related to persistence.

Some embodiments may admit of Docker modifications. As an example, the etcd and registry docker containers, used by CMSP, are standalone, system-managed containers. The etcd and registry require storage, which can be dynamically provisioned and then consumed as a docker volume plug-in. One way is to use static EBS disks attached to the docker host (EC2 host). The EBS disks can be attached to the docker host during cluster overseer deployment.

In some embodiments, features may include, for example, a capability such that once the cluster overseer instance boots up, a call to the cluster overseer agent API serves to initiate the cluster overseer's cluster creation. Various IP tables, networking rules, and assigned ports serve to expose various representational state transfer (REST) APIs as well as other APIs. In various embodiments, the cluster overseer itself and/or its functions can span across multiple AZs and regions.

As an example, further considerations may include possible features/capabilities/deployment such as the use of a single cluster overseer including customer-owned tooling that can manage virtualized infra and k8s infra using a common console. In this case, it is possible to deploy the cluster overseer from the marketplace or from an interface such as Terraform. Strictly as possibilities, multiple clusters can be listed under the same user interface pane. Further, federation of cluster overseer APIs (e.g., to add worker nodes to a cluster), and/or deployment of a cluster overseer in the context of thin provisioning (e.g., to facilitate using pay-per-use cloud resources for compute and storage) can be handled in a manner to facilitate scaling of clusters in multiple independent dimensions. Still further, certain embodiments provision an upgrade path to accommodate flexible configuration of fault tolerance features. Strictly as one example, elastic block storage (EBS) disks can be detached/reattached so as to retain state across reboots and upgrades.

One possible mode of deployment is via Terraform, along with a cluster. The cluster overseer deployment module is written in a way that it can also be deployed in a standalone manner. The Terraform cluster overseer module takes care of setting up the following infrastructure, for example, involving networking (e.g., A deployment can use an existing subnet, or the user can deploy a new VPC, any required public subnets, route tables and security groups) and IAMs (e.g., A cluster overseer can implement an IAM role along with the exact required policies).

After the infrastructure deployment, any infrastructure as code tool (e.g., Terraform) runs scripts to bring up the cluster overseer cluster and enable CMSP. Strictly for illustration of the flexibilities of a cluster overseer as herein envisioned, the mode for executing the create cluster involves secure shell (SSH)-ing into the components involved. An alternative mode is to use the cluster overseer agents. To configure the cluster overseer agent, certain ports need to be opened up by modifying the firewall, which can be done after some initial bring-up.

One embodiment involves upgrading the cluster overseer (which is a stateful distributed Kubernetes application) without any downtime. To do so, consider that when a container-attached storage component runs as K8s Pods and exposes storage infrastructure to other applications, then upgrades for container-attached storage component can be handled in a manner that ensures zero downtime (i.e., to avoid downtime for end-user applications that rely on the aforementioned storage). Using this approach, it can be seen that the cluster overseer can be upgraded in a manner that ensures zero downtime for the cluster overseer as well as for end user applications that rely on the aforementioned storage.

In some embodiments, a containerized cluster overseer is configured by an external system. In some cases, the system comprises one or more computer processors to execute a set of program instructions. As such the program instructions include program instructions for identifying a Kubernetes cluster, program instructions for configuring the cluster overseer as one or more executable containers that are able to execute on cloud-provided infrastructure and to interface with executing containers within the Kubernetes cluster, and program instructions for initiating configuration of the cluster overseer to commence monitoring of processes that are interacting with components of the Kubernetes cluster.

In some embodiments, a virtualization system's operating system is subjected to containerization. A virtualization system's operating system (OS) can be configured with extensive capabilities, many of which are relied upon by higher level computing entities. Strictly as examples, a virtualization system's OS might be configured to initialize and manage initial access to any type of storage device, including direct-attached storage in addition to network-attached and cloud-attached storage. In some cases, a virtualization system's OS implements some portion of logic in user space and some portion of logic in kernel space. With the help of other virtualization system components in a cluster, a virtualization system's OS is able to virtualize any amount of storage hardware as one global resource pool that is high in reliability, availability, and performance. In some cases, IP-based requests are used to send I/O requests to the virtualization system's OS. The virtualization system's OS can then directly implement storage and I/O optimizations (e.g., within a direct data access path), and in some cases without the need for aid from other computing modules.

There are many ways to containerize a virtualization system's OS. Strictly as illustrative examples, various techniques involve Docker functionality. As one class of such examples, considerations for Dockerize-ing a virtualization system's OS are discussed. By applying the herein-disclosed transformation techniques, it is possible to run a virtualization system's OS directly as a cloud-native executable, yet without relying on an underlying hypervisor. Strictly as one transformation example, a Docker image can be created from a "gold disk" build image using the docker *import* method. This build image could be in any known format, however for illustrative purposes, the technique below discusses the transformation based on a "gold disk" build image in AMI format. To work with this particular format, the build image is first converted into an EBS volume and attached to an elastic compute cloud (also known as "EC2") instance. Next, a tape archive (e.g., a TAR archive) is created by copying the build image files from the attached EBS volume. Then, using the docker *import* command, the TAR archive is imported to create a Docker base image.

It should be noted that running an operating system inside Kubernetes is a possible implementation variation. For example, consider that the Docker image that was created in the previous section can be used for the creation of operating system pods. In order to automate an operating system cluster creation in the Kubernetes environment, a new Kubernetes operator is created, which then creates custom resource definitions (CRDs) for the operating system's cluster. This operator also implements a controller that handles the management and orchestration of the operating system cluster.

In certain embodiments, example components/artifacts may be involved in creating an operating system cluster inside Kubernetes. As an example, one consideration may be to add custom resource definitions (CRDs) for a virtualization system cluster. A CRD accepts parameters like nodeCount and extra EBSStoragePerNode. This operator is capable of orchestrating an automated virtualization system cluster deployment. Based on node count and other parameters, it deploys CVM pods and configures a storage class as well as any supporting PVC objects.

Additional examples for a virtualization system's OS operator may include monitors for changes in cluster configuration, which such OS operator can reconcile a current cluster state with a desired state, as well as monitoring Kubernetes Pods (e.g., CVM Pods) and then recreating Pods whenever needed. Further, similar to other Kubernetes resources, a virtualization system cluster information is also persisted in etcd. Additional example considerations are that the virtualization system's OS operator implements or fosters visibility and operation of a container network interface (CNI), assigns specific static IP addresses to a Pod (e.g., to comport with embodiments where the CVM's IP address is static), determines a networking security solution, eliminates the dependency on CVM IP addresses, implements an iSCSI data services IP address (DSIP), and deploys a Kubernetes ClusterIP service that interacts with any deployed operating system Pods (e.g., Kubernetes Pods) and the iSCSI portal. The envisioned configuration advertises a container-attached storage interface.

In some embodiments, running a virtualization solution's operating system without hypervisor dependency (e.g., as a CVM Only Node) is an additional possible technique. As such and as discussed previously, to run an operating system (e.g., a virtualization solution's operating system) natively on Kubernetes, it is felicitous to dockerize the CVM image and eliminate all dependencies on the hypervisor. The operating system stack is designed to operate in a virtualized hyperconverged environment, with CVM running as a VM on top of the AHV hypervisor. The CVM contains logic that has hypervisor dependencies, such as fetching active RAID host boot disk information in disk_manager; collecting hardware and hypervisor-specific statistics in sys_stat_collector; modifying network routes in ha_service; managing and publishing stats for CVMs and UVMs; conducting hardware and hypervisor-specific checks; performing network configuration, etc. In generalized cases, it might not be possible to run an operating system in a Pod without removing the hypervisor dependencies. However, to address this challenge, a native CVM or CVM-only node configuration can be used. At a high level, a native CVM design implements: (1) a new hypervisor type "kNativeHost" to abstract out the hypervisor specific handling, (2) a customized high-availability service handling, (3) a technique to facilitate identification of a native operating system and or existence of CVM-only nodes, and (4) a new cluster function to include a selected subset of services that are needed in a non-virtualized environment.

In some embodiments, a virtualization system's operating system is itself containerized. In some cases, the system comprises one or more computer processors to execute a set of program instructions, the program instructions for: (1) identifying a Kubernetes cluster, (2) identifying a build image of a virtualization system operating system, (3) configuring the virtualization system OS as one or more executable containers that are able to execute on cloud-provided infrastructure and to interface with executing containers within the Kubernetes cluster, and (4) initiating configuration of the virtualization system OS to commence provision of services that are provided to components of the Kubernetes cluster.

In some embodiments carrying out the foregoing results may result in significant capability advances. As such, the following describes examples of such advances. In some embodiments, the resulting capability advancements may include, for example, an ability to convert an existing qCOW image of a storage controller VM into a container image, an ability to automatically separate stateful and stateless sections of the resultant tar bundle into separate partitions and keep the stateful partitions as independent cloud-native snapshots which are instantiated at runtime when a Pod is spun off, and an ability to run all configurations and post startup scripts at build time itself to create the most up-to-date container image to significantly improve the startup time. Further, an ability to dynamically eliminate traditional services which are used in hypervisor interaction and VM management or virtualization workflows, by having a configurable way to start only the most required services when container starts up and an ability to an ability to invoke a custom systemctl as a startup process (e.g., to start all the services via systemd in root context).

In some embodiments, a method for operating a container-attached storage facility includes situating a cloud-resident containerized control module situated in a Kubernetes Pod; and associating a plurality of storage devices into a common access space that is accessible by the cloud-resident containerized control module, wherein, responsive to receiving a storage I/O request referencing a portion of storage addressable by the common access space, the cloud-resident containerized control module redirects the storage I/O request to a storage device of the common access space.

In some embodiments, such as some of those as described in the preceding section, storage I/O is redirected based on an I/O address of the common access space. In some embodiments at least one instance of the storage devices of the common access space is situated in at least one of, an on-premises environment, or a third-party environment.

In some embodiments the storage I/O request referencing a portion of storage addressable in the common access space is translated into a long-haul I/O.

In some embodiments storage I/O is redirected to at least one instance of the storage devices of the common access space forms a cloud-provided block storage facility.

In some embodiments at least one instance of the storage devices of the common access space is situated in at least one of, an on-premises environment, or a third-party environment.

In some embodiments the storage I/O request referencing a portion of storage addressable in the common access space is redirected to a storage pool formed of node-local storage facilities.

Some embodiments further comprise an external locator service that stores metadata pertaining to the node-local storage facilities that form the storage pool.

In some embodiments the storage I/O request referencing a portion of storage addressable by the common access space is translated from a first protocol into a second protocol.

In some embodiments the first protocol is iSCSI and the second protocol is SONET.

In some embodiments storage I/O is redirected to access at least one instance of the storage devices of the common access space.

In some embodiments at least one instance of the storage devices of the common access space is situated in at least one of, an on-premises environment, or a third-party environment.

Some embodiments further comprise instructions which, when stored in memory and executed by the processor cause the processor to perform further acts of an external locator service that stores metadata pertaining to the node-local storage facilities that form the storage pool.

Some embodiments implement a system comprising a container-attached storage facility such as is described in the preceding.

Some embodiments implement a computer readable medium having stored thereon a sequence of instructions which, when stored in memory and executed by a processor cause the processor to perform one or more of the methods in accordance with the preceding.

Further details of aspects, objectives and advantages of the technological embodiments are described herein and in the figures and claims.

### BRIEF DESCRIPTION OF THE DRAWINGS

The drawings described below are for illustration purposes only. The drawings are not intended to limit the scope of the present disclosure.

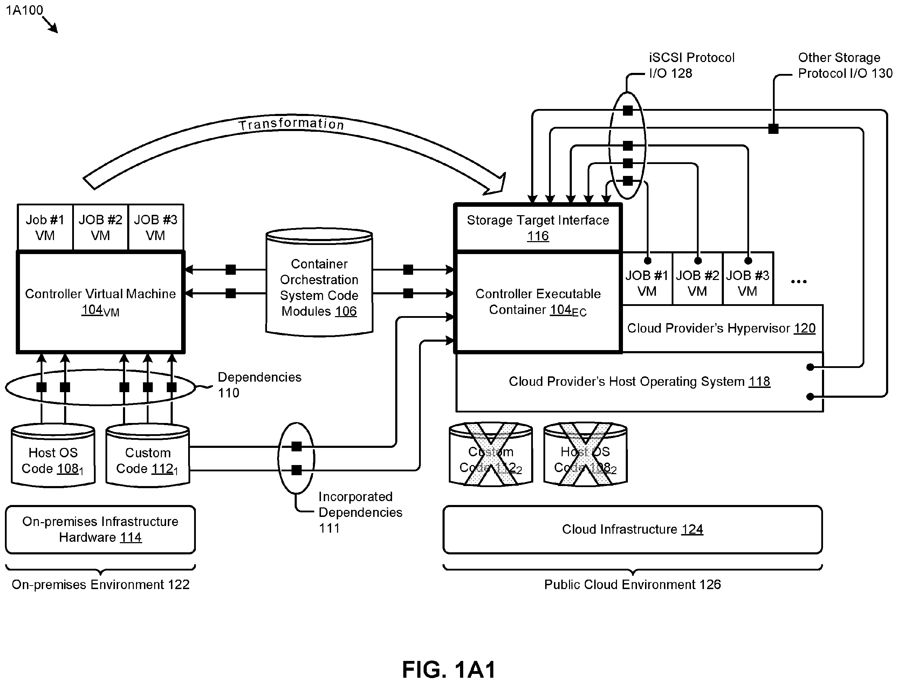

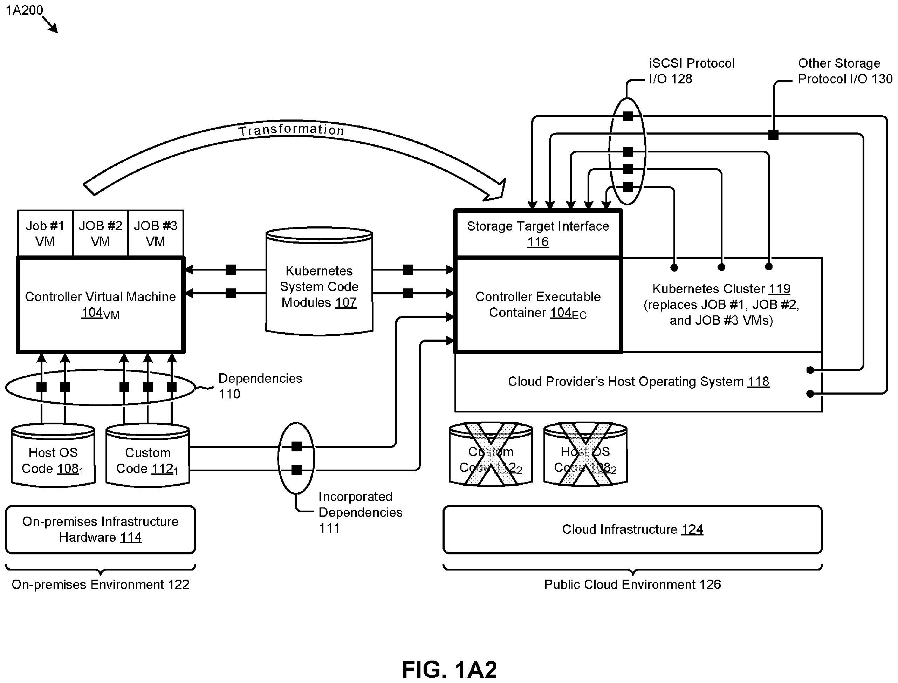

**FIG. 1A1** exemplifies a transformation of operational components of a hypervisor-based virtualization system into a cloud provider's virtualization system, according to an embodiment.
**FIG. 1A2** exemplifies a transformation of operational components of a hypervisor-based virtualization system into a Kubernetes cluster system, according to an embodiment.

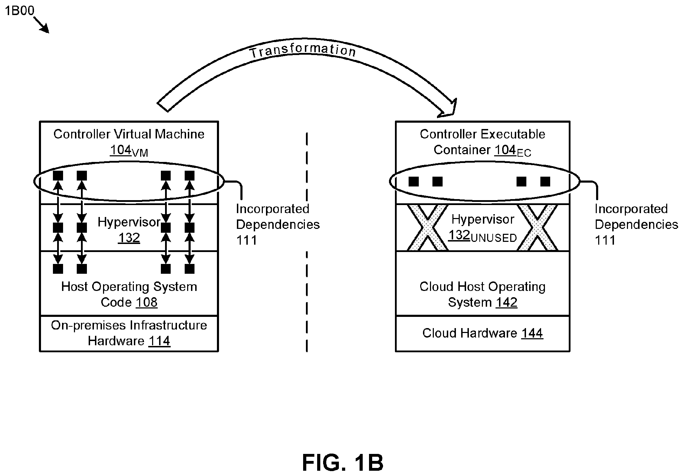

**FIG. 1B** shows a transformation of a controller virtual machine into a controller executable container that does not rely on a hypervisor, according to an embodiment.

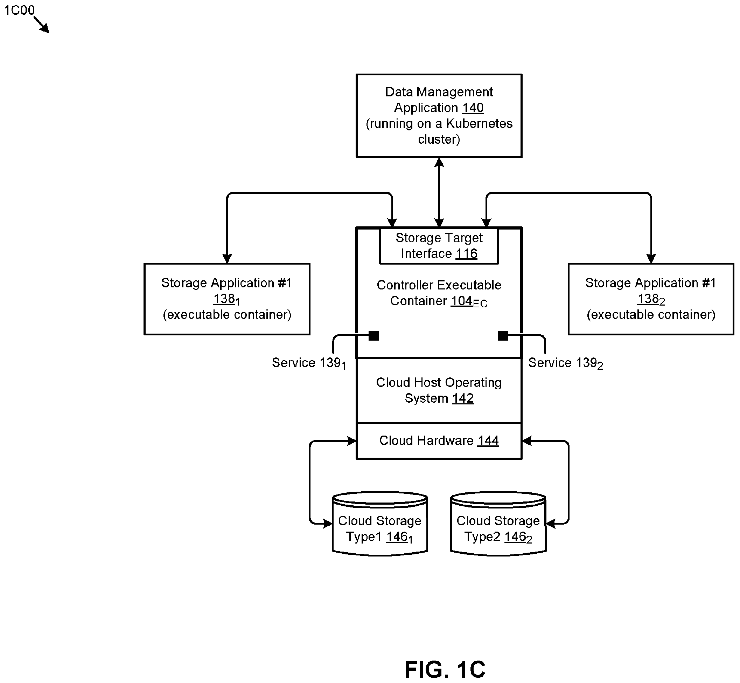

**FIG. 1C** shows a system that includes the addition of a storage target interface layer as an entry point to services of a controller executable container, according to an embodiment.

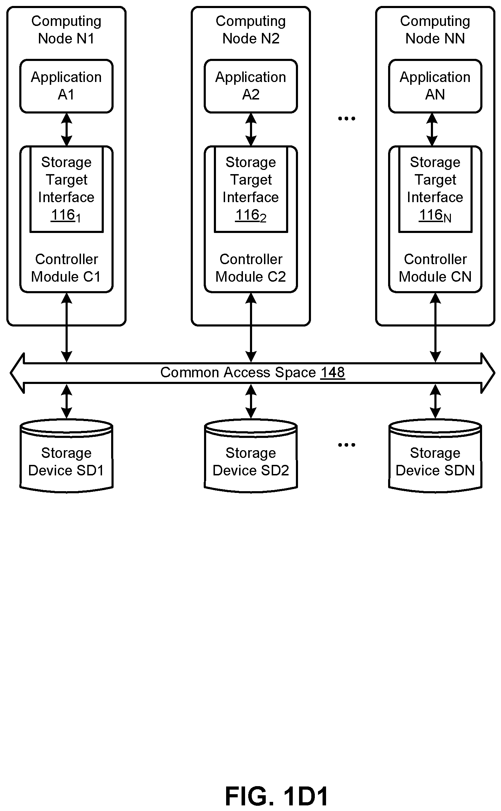

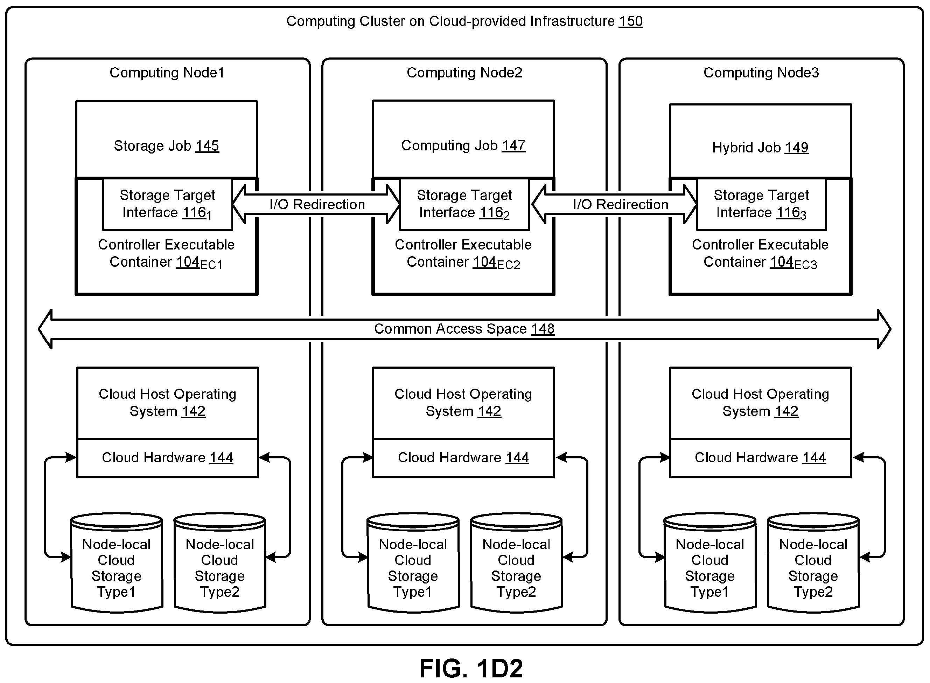

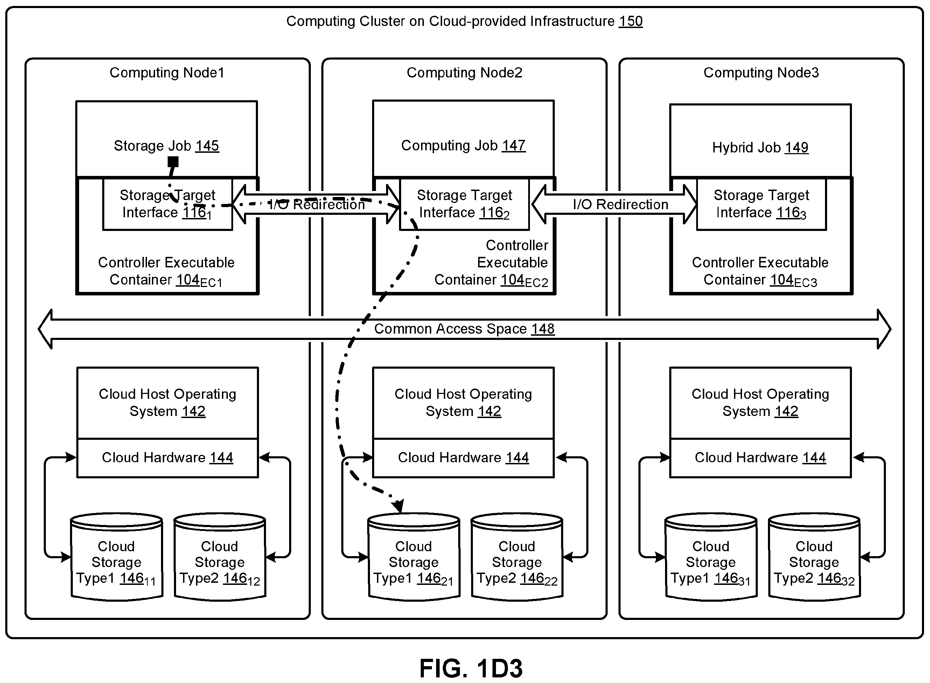

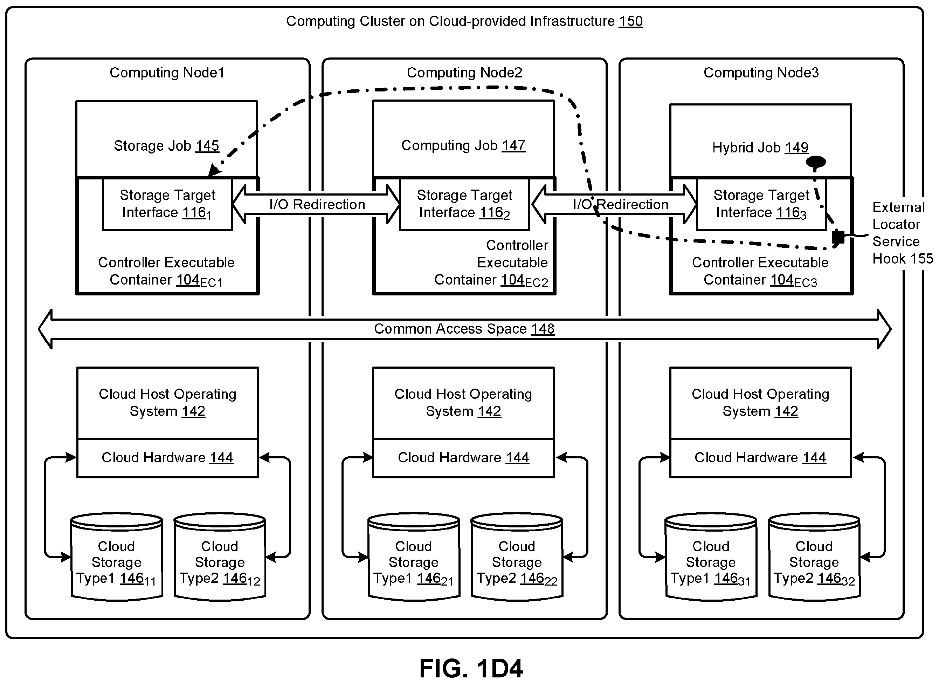

**FIG. 1D1****,** **FIG. 1D2****,** **FIG. 1D3****,** and **FIG. 1D4** each show a collection of computing nodes, each with a respective storage target interface layer implemented within a controller module, according to some embodiments.

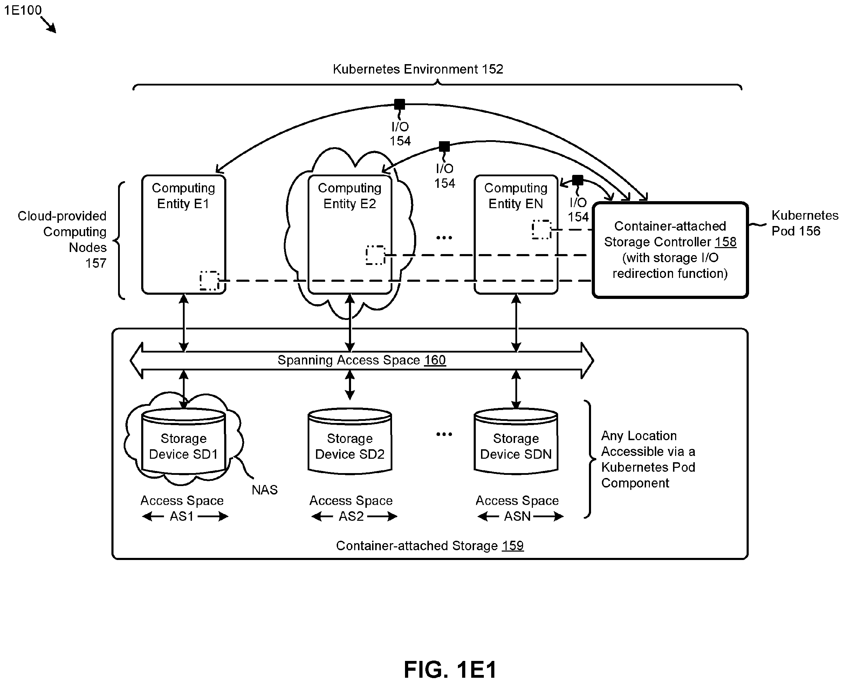

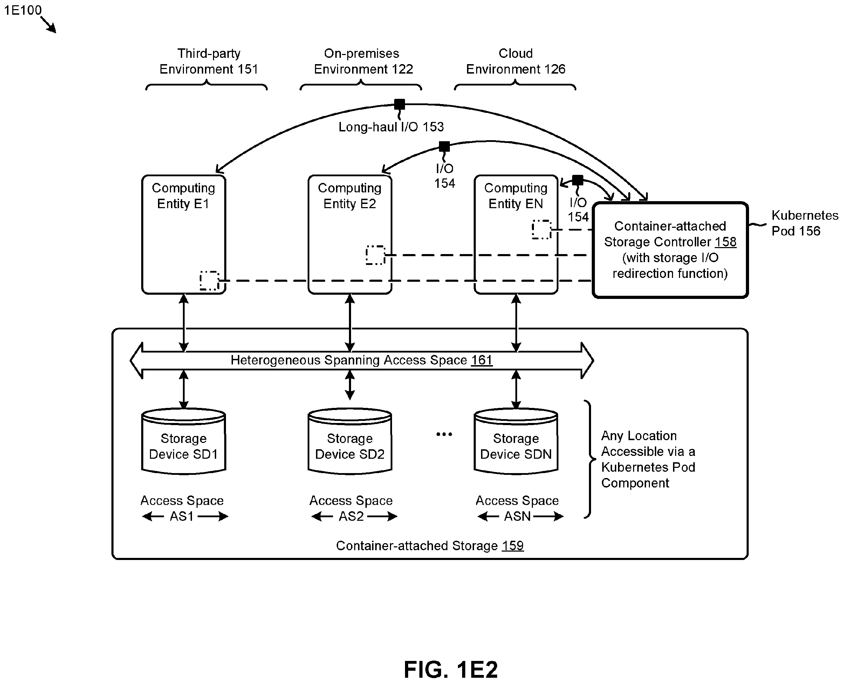

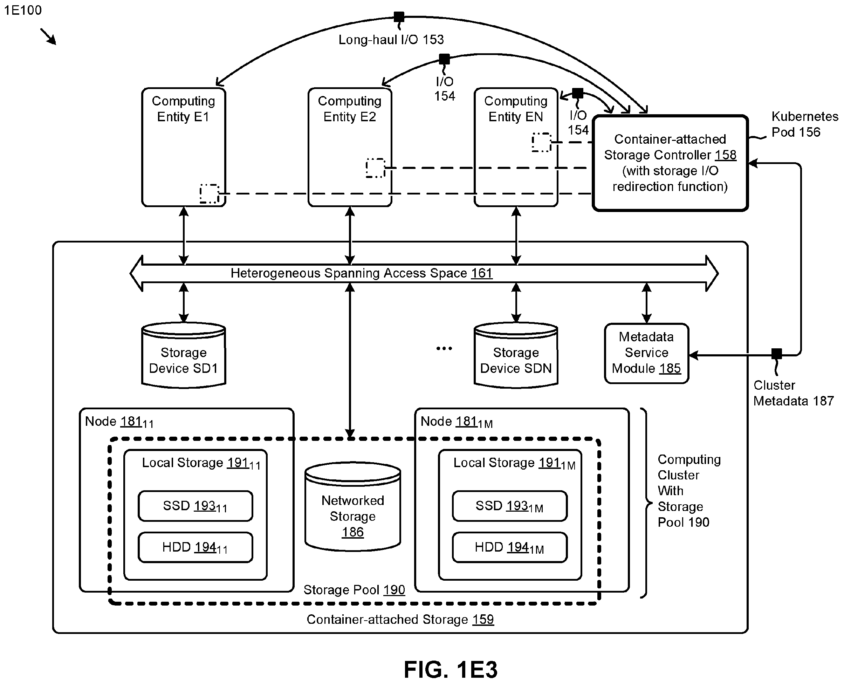

**FIG. 1E1** depicts a container-attached storage system having a storage target interface layer implemented within a Kubernetes environment, according to an embodiment.
**FIG. 1E2** depicts a container-attached storage system having a storage target interface layer configured to access storage of different environments over a multi-environment, heterogeneous spanning access space, according to an embodiment.
**FIG. 1E3** depicts a container-attached storage system having a storage target interface layer configured to access a storage pool of a computing cluster over the multi-environment, heterogeneous spanning access space, according to an embodiment.
**FIG. 2A** presents a system for implementing a container-attached storage facility in a Kubernetes environment, according to an embodiment.
**FIG. 2B** presents a system for handling round-trip I/O redirection, according to an embodiment.
**FIG. 3A** depicts containerization of a cluster overseer, according to an embodiment.
**FIG. 3B** presents a system for configuring a containerized cluster overseer, according to an embodiment.
**FIG. 4A** depicts containerization of a virtualization system's operating system, according to an embodiment.
**FIG. 4B** presents a system for configuring a containerized virtualization system's operating system, according to an embodiment.
**FIG. 5A****,** **FIG. 5B****,** **FIG. 5C****,** and **FIG. 5D** depict virtualization system architectures comprising collections of interconnected components suitable for implementing embodiments of the present disclosure and/or for use in the herein-described environments.

### DETAILED DESCRIPTION

Aspects of the present disclosure solve problems associated with using computer systems for providing cloud-native storage and self-service tools with centralized data management in a Kubernetes environment. These problems are unique to, and may have been created by, the designers of public clouds. Computer-implemented methods of public clouds, in particular those that implement all or parts of a Kubernetes environment, fail to provide cloud-native storage and self-service tools with centralized data management. Some embodiments are directed to approaches for deploying a cluster node controller as a cloud-native executable container that functions as a storage target. The accompanying figures and discussions herein present example environments, systems, methods, and computer program products for implementing a containerized virtualization system controller that is addressed via a storage target interface.

### OVERVIEW

In the first wave of Kubernetes adoption, the focus was on stateless workloads. These workloads were oblivious to external state changes such as if a Kubernetes POD or node failed or was killed; the workload would just be moved to another node in the cluster and restarted. However, when it emerges that data and state appear together in the containers (also called stateful components), the need for container-attached storage arises. With stateful applications, developers keep the application state (database/message queue/flat files/key-value store, etc.) inside the Kubernetes clusters. The definition of custom Kubernetes "Operators" and making Kubernetes native storage options available become an important proposition to deliver domain-specific knowledge in the running of these stateful components in Kubernetes environments.

### Container-attached Storage

As used herein, the term "container-attached storage" (e.g., CAS or nuCAS) is a software-defined storage facility that is Kubernetes native and is deployed as storage controllers that run as containerized services or microservices. The storage platforms using the container-attached storage provide an app-centric approach for storage administration where application administrators and/or corresponding developers set their storage, back-up, and DR policies, perf QoS, and replication patterns as if the application has its independent storage engine under the ownership of the application administrator. One CAS architecture proposes using the operating system services (e.g., intra-OS services or sidecar services) to build a storage platform where the operating system instances run as Kubernetes Pods.

As discussed hereunder, the Kubernetes platform could be running in an on-premises environment or could be running in/on a cloud. In many cases the embodiments use custom resource definitions (CRDs) to represent low-level storage resources, enabling storage to be seamlessly integrated with cloud storage resources and tools. Similar to hyperconverged systems, where one can add nodes having constituent control virtual machines (CVMs) and virtual disks (vDisks) that incrementally add compute and storage to handle application load increases, the storage and performance of a volume in a CAS system must be scalable. As the number of container applications increase in a given Kubernetes cluster, more compute and/or storage resources can be added to the Kubernetes cluster to increase overall capacity and availability. Autonomous scheduling could be used to ensure that the application Pod and its primary storage copy reside on the same compute node to provide better latency and throughput.

The foregoing and other advantages of CAS are shown and described hereunder.

### Definitions and Use of Figures

Some of the terms used in this description are defined below for easy reference. The presented terms and their respective definitions are not rigidly restricted to these definitions-a term may be further defined by the term's use within this disclosure. The term "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application and the appended claims, the term "or" is intended to mean an inclusive "or" rather than an exclusive "or". That is, unless specified otherwise, or is clear from the context, "X employs A or B" is intended to mean any of the natural inclusive permutations. That is, if X employs A, X employs B, or X employs both A and B, then "X employs A or B" is satisfied under any of the foregoing instances. As used herein, at least one of A or B means at least one of A, or at least one of B, or at least one of both A and B. In other words, this phrase is disjunctive. The articles "a" and "an" as used in this application and the appended claims should generally be construed to mean "one or more" unless specified otherwise or is clear from the context to be directed to a singular form.

Various embodiments are described herein with reference to the figures. It should be noted that the figures are not necessarily drawn to scale, and that elements of similar structures or functions are sometimes represented by like reference characters throughout the figures. It should also be noted that the figures are only intended to facilitate the description of the disclosed embodiments-they are not representative of an exhaustive treatment of all possible embodiments, and they are not intended to impute any limitation as to the scope of the claims. In addition, an illustrated embodiment need not portray all aspects or advantages of usage in any particular environment.

An aspect or an advantage described in conjunction with a particular embodiment is not necessarily limited to that embodiment and can be practiced in any other embodiment even if not so illustrated. References throughout this specification to "some embodiments" or "other embodiments" refer to a particular feature, structure, material, or characteristic described in connection with the embodiments as being included in at least one embodiment. Thus, the appearance of the phrases "in some embodiments" or "in other embodiments" in various places throughout this specification are not necessarily referring to the same embodiment or embodiments. The disclosed embodiments are not intended to be limiting of the claims.

### DESCRIPTIONS OF EXAMPLE EMBODIMENTS

**FIG. 1A1** exemplifies a first transformation of operational components 1A100 of a hypervisor-based virtualization system into a cloud provider's virtualization system. As an option, one or more variations of operational components or any aspect thereof may be implemented in the context of the architecture and functionality of the embodiments described herein and/or in any environment.

Hypervisor-based virtualization system architectures often rely on the existence of a hypervisor and virtual machines (VMs) that run on top of said hypervisor. This architecture suffers from dependencies that might not be satisfied by a public cloud offering, and as such there are many challenges to porting (e.g., transforming) from one virtualization system to a cloud-provided virtualization system.

In particular, there are certain virtualization systems that provide a standardized way for virtual machines (e.g., the shown JOB #1 VM, JOB #2 VM, JOB #3 VM) to interact with storage systems. More specifically, a virtualization system might include a controller virtual machine 104_{VM} that handles storage I/O to/from/between the virtual machines (VMs) and any on-premises infrastructure hardware 114 (e.g., storage devices). While this is a very convenient way to virtualize away any specific hardware requirements that may come with the on-premises infrastructure hardware 114, it comes with reliance (e.g., dependencies 110) on aspects of the on-premises environment 122, namely reliance on certain portions of host OS code 108₁, and/or reliance on custom code 112₁. Such dependencies might not be provided, and indeed are most often not provided by a given public cloud provider. As such, there nevertheless needs to be some way to port the VMs from the on-premises environment 122 to the particular cloud infrastructure 124 of a public cloud environment 126.

One way to do so is via the shown transformation which transformation, among other things, incorporates the code corresponding to the shown dependencies 110 into the code base of a controller executable container 104_{EC}. In this manner, an instance of controller executable container 104_{EC} can run in the public cloud environment 126 even in absence of host OS code 108₂ and/or in absence of custom code 112₂. Note the "X" through the depiction of host OS code 108₂ and custom code 112₂. This "X" is shown to illustrate that those code bases are not made available by the public cloud vendor. Rather, any code needed by controller executable container 104_{EC} (e.g., code from host OS code 108₁ and/or custom code 112₁) can, as one aspect of the transformation, be incorporated into the code base of the controller executable container via incorporated dependencies 111.

Now, with the dependencies issue resolved, the jobs (as VMs) can be ported to the cloud infrastructure of the public cloud environment 126 to run on top of the cloud provider's hypervisor 120 which in turn runs on top of the cloud provider's host operating system 118. As such, the jobs are still able to take advantage of whatever services were/are provided by controller executable container 104_{EC} even though the controller is has been transformed into an executable container.

One particular service class of interest are those services provided by the controller executable container 104_{EC} that pertain to standardized access to storage devices (e.g., via the iSCSI protocol I/O 128). To facilitate the foregoing standardized access to storage devices, a storage target interface 116 is provided. This storage target interface can accept any type of storage I/O in accordance with any protocol (e.g., via the iSCSI protocol I/O 128 or via some other storage protocol I/O 130) and process that I/O in the same manner as was provided by the controller virtual machine 104_{VM} of the on-premises environment.

It should be noted that the container orchestration system code base (e.g., the shown container orchestration system code modules 106) can be or derive from any container orchestration system code base. However, a particular container orchestration system code base known as Kubernetes is of particular interest, at least because Kubernetes supports computing clusters in a standardized and open-sourced manner.

As used herein, "Kubernetes" (also known as "K8s"), is an open source system for managing containerized applications. Kubernetes builds upon a decade and a half of experience in running production workloads at scale. The open source community brings forth best-of-breed ideas (e.g., "Kubernetes clusters") and implements them into the open source code base.

The broad adoption of Kubernetes-defined executable containers in combination with the tried-and-true underlying capabilities of Kubernetes clusters facilitates migration from a virtual machine and hypervisor-based system to an executable container-based system such as is provided by Kubernetes clusters. An example migration is shown and discussed as pertains to FIG. 1A2. More particularly, FIG. 1A2 depicts a transformation of virtualization system components of the shown on-premises environment into a Kubernetes cluster situated into public cloud environment 126.

**FIG. 1A2** exemplifies a second transformation of operational components 1A200 of a hypervisor-based virtualization system into a Kubernetes cluster system. In this particular embodiment, the container orchestration system code modules 106 of FIG. 1A1 are replaced by Kubernetes system code modules 107 and a Kubernetes cluster 119 that is running JOB #1, JOB #2, and JOB #3 (which replace JOB #1, JOB #2, and JOB #3 VMs of FIG. 1A1). This is to illustrate that a workload can be containerized in accordance with Kubernetes semantics, and then situated into a public cloud environment. As shown, the workload comprising all of JOB #1, JOB #2, and JOB #3 communicates with storage through the iSCSI protocol I/O into storage target interface 116. It should be noted that the shown controller executable container 104_{EC} incorporates any dependencies that were present in the controller virtual machine 104_{VM} on which the controller executable container 104_{EC} is based. Thus, controller executable container 104_{EC} does not have any requirement that the public cloud environment offer host OS code 108₂ and/or custom code 112₂.

Instead, such reliance is eliminated by operation of incorporated dependencies 111. There are many ways to eliminate such dependencies from virtualization system components such that they can be redeployed into nodes of a public cloud environment and in a manner that implements a computing cluster comprised of said nodes. One way to implement such reliance is to deploy a self-contained cluster controller that is free of dependencies on code that the cloud provider might not offer, and then to instance the self-contained cluster controller onto multiple nodes, where each node communicates with each other node through a common access mechanism (e.g., a common namespace or a common address space).

Dependencies that a controller virtual machine might have on virtualization system components (e.g., dependencies on a virtualization system's hypervisor and/or dependencies that a controller virtual machine might have for the host OS components) are eliminated, possibly by bringing on a copy of the code depended upon. This then creates the situation whereby such a self-contained codebase (i.e., without the aforementioned dependencies) can become a subject virtual machine for imaging as a controller executable container 104_{EC.} Various techniques for transforming a virtualization system's codebase can be imaged as a controller executable container are shown and described infra. Included in the disclosure are techniques for transforming a particular virtualization system's user virtual machines can be imaged as a controller executable container that avails of both (1) the cloud-provided infrastructure and (2) cloud-provided services (e.g., imaging services).

The following FIG. 1B addresses one possible way for operational elements of a virtualization system-in particular, operational elements that are used to implement a storage I/O controller-to be deployed onto cloud infrastructure without dependencies on code that the cloud provider might not offer. Moreover, the following FIG. 1B addresses one possible way for a storage I/O controller (e.g., a storage target interface 116 and its underlying controller) to be deployed onto the cloud infrastructure regardless of whether or not the public cloud's infrastructure supports any particular type of hypervisor, and regardless of whether or not the public cloud's infrastructure supports a hypervisor at all.

**FIG. 1B** shows a transformation of a controller virtual machine into a controller executable container that does not rely on a hypervisor. As an option, one or more variations of the transformation 1B00 or any aspect thereof may be implemented in the context of the architecture and functionality of the embodiments described herein and/or in any environment.

As shown on the left side of FIG. 1B, any dependencies that the controller virtual machine 104_{VM} has on hypervisor 132 and/or on host operating system code 108 are removed by bringing in incorporated dependencies 111 onto the code base of the controller virtual machine. In this manner then, the controller virtual machine can be transformed and deployed as a controller executable container 104_{EC}. This is so that a stand-alone instance of controller executable container 104_{EC} can operate on top of cloud host operating system 142, which in turn is on top of cloud hardware 144. It should be noted that this is in spite of the absence of hypervisor 132_{UNUSED}, which is shown with big "X"-es to indicate that the hypervisor of cloud infrastructure 124 (if any) is not needed (in this embodiment).

FIG. 1B depicts merely one possible embodiment and/or way to implement a stand-alone controller executable container. Many variations are possible; for example, the controller executable container as comprehended in the foregoing can be implemented in any environment, one example of which is shown and described as pertains to the following FIG. 1C. In particular, a controller executable container such as depicted in FIG. 1B can serve any number of concurrently running applications (e.g., storage applications, data management applications, etc.).

**FIG. 1C** shows a system 1C00 that includes the addition of a storage target interface layer as an entry point to services of a controller executable container. As an option, one or more variations of storage target interface layer or any aspect thereof may be implemented in the context of the architecture and functionality of the embodiments described herein and/or in any environment.

The figure is being presented to illustrate how a storage target interface layer might be configured into a controller executable container to operate as an entry point to storage services. The shown embodiment exemplifies an iSCSI storage target that is subsumed into a controller executable container. In this and other embodiments, the notion of a storage target need not be limited to a narrow understanding that that a target must be a physical storage device. Rather, in this and other embodiments, the meaning of a storage target can include processing of storage commands in any manner, whether the storage target is virtual or physical, or whether the storage target is block oriented or whether the storage target is file oriented.

As shown in the embodiment of FIG. 1C, any number of storage applications can run alongside a controller executable container 104_{EC}. Such applications can (1) initiate communications (e.g., storage commands) to storage target interface 116 as well as (2) receive communications (e.g., commands) from a controller executable container. In the shown embodiment, a controller executable container interfaces with a cloud host operating system 142. As such, it sometimes happens that a command such as one issuing from a data management application (e.g., data management application 140 such as a snapshot application, a disaster recovery application, etc.) running on a Kubernetes cluster might first invoke one or both (or more) of the shown storage applications (e.g., storage application #1 138₁, storage application #2 138₂), which in turn might issue further storage commands (e.g., to access one or more of service 139₁ and/or service 139₂). It sometimes happens that some storage commands are processed first by the controller executable container and then by the cloud host operating system, and then by any one or more types of cloud-provided storage (e.g., cloud storage type1 146₁, cloud storage type2 146₂, 'hot' storage, 'cold' storage, other multi-tiered storage facilities, blob storage, etc.).

The foregoing discussion of FIG. 1C pertains to merely some possible embodiments and/or ways to implement a storage target interface layer within a controller executable container. Many variations are possible; for example, the storage target interface layer as comprehended in the foregoing can be implemented in any environment, examples of which are shown and described as pertains to FIG. 1D1, FIG. 1D2, FIG. 1D3, and FIG. 1D4.

**FIG. 1D1** shows a collection of computing nodes (e.g., computing node N1, computing node N2, ..., computing node NN) running respective application (e.g., application A1, application A2,..., and application AN), each with a respective storage target interface layer (e.g., storage target interface 116₁, storage target interface 116₂, ..., storage target interface 116_{N}) implemented within or as respective controller modules (e.g., controller module C1, controller module C2,..., and controller module CN).

The figure is being presented to illustrate one type of computer cluster formed of a plurality of computing nodes, where each individual one of the computing nodes accesses any storage device (e.g., storage device SD1, storage device SD2, storage device SDN) over common access space 148.

This is merely one embodiment of a computing cluster. Many variations are possible. In some cases, a computing cluster can be formed on nodes taken from the cloud-provided infrastructure.

**FIG. 1D2** shows a collection of controller modules (e.g., controller executable container 104_{EC1}, controller executable container 104_{EC1}, controller executable container 104_{EC3}), each with a respective storage target interface layer (e.g., storage target interface 116₁, storage target interface 116₂, storage target interface 116₃) for accessing a respective controller module. The collection of nodes is organized into a multi-node cluster where each node accesses one or more cloud storage devices of various cloud storage types (e.g., node-local cloud storage type1, node-local cloud storage type2, etc.) that are organized into a common access space 148. As an option, one or more variations of multi-node cluster or any aspect thereof may be implemented in the context of the architecture and functionality of the embodiments described herein and/or in any environment.

The figure is being presented to illustrate how certain configurations of nodes (e.g., computing node1, computing node2, ..., computing node3) can be amalgamated into a computing cluster that runs on top of or within cloud-provided infrastructure 150. More particularly, the figure is being presented to illustrate how a storage target interface can perform I/O redirection. Still more particularly, the figure depicts several different types of jobs (e.g., storage job 145, computing job 147 and hybrid job 149) running on several different nodes, respectively. The example shows redirection to an adjacent node, however in some topologies and/or in some operational circumstances an I/O redirection can be from any node to any other node of the cluster. Moreover, the function(s) underlying redirection can be implemented using any known mechanism.
Further techniques for handling redirection can be found in U.S. Patent No. 10,838,620 titled, "EFFICIENT SCALING OF DISTRIBUTED STORAGE SYSTEMS".

**FIG. 1D3** depicts the case where the redirection function is carried out within the controller executable container, whereas FIG. 1D4 depicts the case where the redirection function is carried out using an external locator service that is called from the controller executable container.

To further explain, suppose that each node is assigned to handle I/O for one particular portion of the common access space. Further suppose that computing node2 is assigned to handle I/O for the storage devices of computing node2 (e.g., cloud storage type1 146₂₁ and cloud storage type2 146₂₂). Lastly, suppose that storage job 145 raises an I/O that is bound for one of the storage devices of computing node2. In this embodiment, a storage I/O of storage job 145 is redirected to the storage target interface 116₂ that is situated on computing node2. In this example, the controller executable container 104_{EC2} receives the redirected storage I/O and forwards it to cloud storage type1 146₂₁.

This particular example comports with redirection to an adjacent node, however any particular I/O can be redirected to any node using any technique. For example, a storage I/O can originate from any node, and from any computing entity, (e.g., from a job, or from a controller executable container such as controller executable container 104_{EC1}, or controller executable container 104_{EC2}, or controller executable container 104_{EC3}) and be redirected to a storage device of any type (e.g., cloud storage type1 146₁₁, cloud storage type2 146₁₂, cloud storage type1 146₂₁, cloud storage type2 146₂₂, cloud storage type1 146₃₁, cloud storage type2 146₃₂) located on any node of the cluster.

**FIG. 1D4** depicts an I/O redirection mechanism where the redirection function is carried out using an external locator service such as a distributed metadata service module (e.g., via the well-known "Cassandra" software) that is called from the controller executable container. As shown, the I/O originates from hybrid job 149 and is passed into controller executable container 104_{EC3} via storage target interface 116₃, which autonomously or in conjunction with controller executable container 104_{EC3} accesses an external locator service, possibly through use of an external locator service hook 155. Then, having a response, such as the looked-up node identifier or such as a network address of the looked-up node, etc., controller executable container 104_{EC3} redirects the I/O to storage target interface 116₁ of the looked-up node. The receiving looked-up node (in this case computing node1) in turn processes the I/O, which is now known to be properly situated at computing node1.
Further techniques for making and using an external locator service can be found in U.S. Patent No. 10,678,457 titled "ESTABLISHING AND MAINTAINING DATA APPORTIONING FOR AVAILABILITY DOMAIN FAULT TOLERANCE"; as well as in U.S. Patent No. 10,698,780 titled "IMPLEMENTING AVAILABILITY DOMAIN AWARE REPLICATION POLICIES".

The foregoing discussions of FIG. 1D1, FIG. 1D2, FIG. 1D3, and FIG. 1D4 pertain to merely some possible embodiments and/or ways to deploy a computing cluster that implements I/O redirection. Many further variations are possible; for example, a single computing node that implements logical I/O redirection mechanisms similar to the physical I/O redirection mechanisms as comprehended in the foregoing can be implemented in a Kubernetes cluster environment. As is known in the art the computing elements that are operational within a Kubernetes cluster can be formed in real time based on a combination of (1) componentry of a virtualization system, and/or (2) any of a variety of open-sourced Kubernetes code modules, and/or (3) customer code (e.g., derivatives of the foregoing #1 and #2), along with a transformation of the foregoing. One possible technological advance for transformation and deployment is shown and described as pertains to FIG. 1E1.

**FIG. 1E1** depicts a container-attached storage system 1E100 having a storage target interface layer implemented within a Kubernetes environment 152 that is provided by a cloud vendor on cloud-provided computing nodes 157. More particularly, container-attached storage system 1E100 includes a storage target interface layer implemented within a containerized controller executable and instanced with or within compute entities that are organized into a Kubernetes Pod. As depicted, code to implement a containerized controller executable can be situated into any node, whether it is a physical node or a virtual node, or even a collection of computing entities that host or form a container-attached storage controller 158. In the example shown here, the Kubernetes environment 152 is situated within a public cloud environment and in a manner such that container-attached storage controller 158 is able to execute on top of a cloud-provided infrastructure. Furthermore, I/O redirection can take place in or through any one (or more) of the instances of container-attached storage controller 158.

In spite of the fact of the deployment of the storage target interface being implemented within a containerized controller executable and instanced as a Kubernetes Pod into a public cloud, the deployment nevertheless serves as a container-attached storage system.

Redirection happens through spanning address space 160 so as to direct storage I/O (e.g., the shown I/O 154) to the proper storage device (that is a constituent of container-attached storage 159) in the proper access space (access space AS1, access space AS2, ..., access space ASN).

As depicted in this embodiment, the address space is not contiguous. In other configurations, the several access spaces (access space AS1, access space AS2, ..., access space ASN) that make up the spanning access space are specifically configured to be purposely contiguous. In other configurations, the several access spaces (access space AS1, access space AS2, ..., access space ASN) that make up the spanning access space are specifically configured to be purposely non-overlapping. Any one or more containerized control modules can be situated in a Kubernetes Pod 156.

As is known in the art, stateful services on Kubernetes are fraught with storage downtimes, lack of quality of service (QoS) features, reliance on manual backups and migration challenges, and data loss. However, given the herein-described advances and, in particular, computing clusters that implement Kubernetes container-attached storage 159 are graceful in handing many kinds of failures. For example, the overall failure-affected radius can be contained by using tried and true virtualization system type availability and data resiliency architectures.

Strictly as examples, for handling node and disk level failures, the system can rely on operating system internal constructs, whereas for handling cluster or availability zone (AZ) level failures, the system can rely on disaster recovery (DR) policies and remote replication flavors. The herein-disclosed CAS facility can deliver high availability to the application through synchronous, asynchronous, and near-synchronous replication. If a node fails, the operating system Pod can be automatically spun off on a new node, and underlying cloud storage resources can move with the Pod with continued storage availability.

The foregoing discussion of FIG. 1E1 pertains to merely some possible embodiments and/or ways to implement a container-attached storage regime using a container-attached storage controller as an interface to container-attached storage in a Kubernetes environment. Many variations are possible using any of a variety of transformation and instantiation techniques, some of which variations are shown and described as pertains to FIG. 1E2.

**FIG. 1E2** depicts a container-attached storage system having a storage target interface layer configured to access storage of different environments over a multi-environment, heterogeneous spanning access space.

One aspect of a spanning access space is that it can federate heterogeneous storage devices (or storage regimes) in a manner that is agnostic to any particular environment. One variation of the spanning access space 160 of FIG. 1E1 is shown in FIG. 1E2 as heterogeneous spanning access space 161. As indicated above, a heterogeneous spanning access space has the characteristic of providing a common name space or a common address space irrespective of whether the storage being accessed is situated in a cloud environment 126, or whether the storage being accessed is situated in an on-premises environment 122, or even if the storage being accessed is situated within the confines of some third-party environment 151.

In some deployments the third-party environment 151 is itself situated entirely in a cloud environment, or the third-party environment 151 is itself situated entirely in an on-premises environment while in other deployments third-party environment 151 is composed of a first facility (e.g., a routing facility or long-haul communication facility) being situated in an on-premises environment and a second facility (e.g., actually storage of bits) is situated in a cloud environment.

In some deployments, the computing entity E1 and its corresponding storage device SD1 are situated a long distance from computing entity E2 and computing entity EN. Accordingly, computing entity E2 and computing entity EN may raise a long-haul I/O 153 that might involve changing protocol in order to accommodate the configuration of the communication path(s) terminating at computing entity E1. In this and other situations, a first storage I/O (e.g., the shown I/O 154) comports with a first protocol (e.g. iSCSI), and a second storage I/O (e.g., the shown long-haul I/O 153) comports with a second protocol (e.g., an inter-data center link protocol such as multi-mode fiber (MMF) or synchronous optical networking (SONET)). The reverse path (i.e., back to the requestor) would also be supported by the two different protocols. In either/both of these cases (i.e., a forward path and a reverse path), communications in a first protocol is translated to a second protocol and vice-versa.

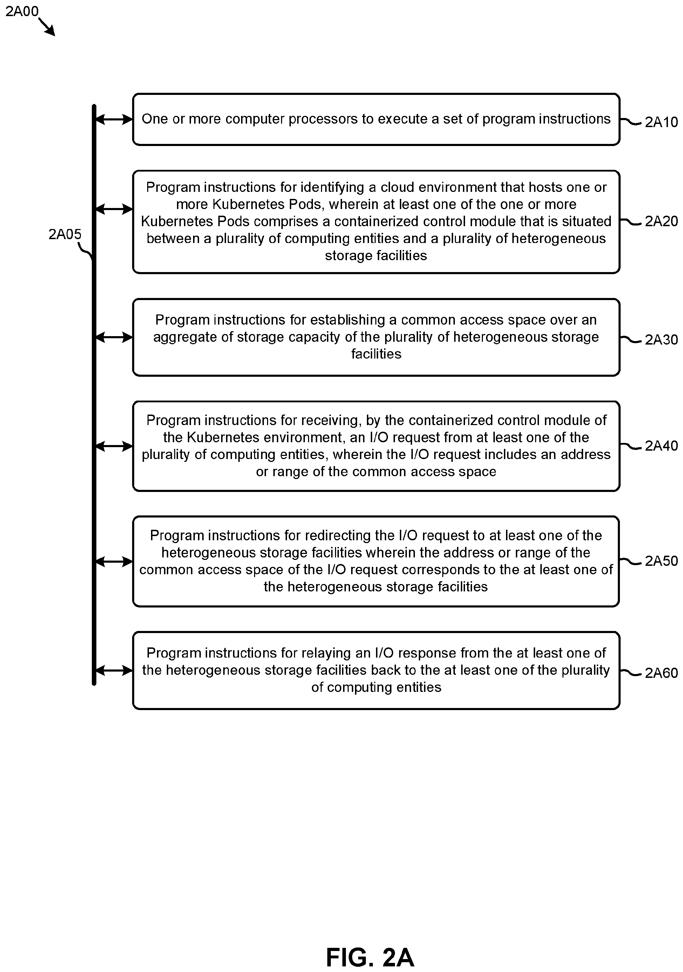

The foregoing discussions of FIG. 1E1, FIG. 1E2, and FIG. 1E3 pertain to merely some possible embodiments and/or ways to implement a container-attached storage regime using a container-attached storage controller as an interface to container-attached storage in various environments. Many variations are possible using any of a variety of transformation and instantiation techniques, some of which are shown and described as pertains to FIG. 2A.

**FIG. 1E3** depicts a container-attached storage system having a storage target interface layer configured to access a storage pool 190 of a computing cluster over the multi-environment, heterogeneous spanning access space. One aspect of storage of a computing cluster is that it is typically configured to be resilient to failure. For example, the storage pool of the shown computing cluster can be configured to comport with a disaster recovery plan, or the storage pool of the shown computing cluster can be configured to comport with a replication factor, etc.

As shown, various computing nodes (e.g., the shown node 181₁₁ and node 181_{1M}) comprising respective node-local storage facilities are organized to form storage pool 190.Such a storage pool can be formed of node-local storage facilities exclusively. Alternatively, such a storage pool can be formed a combination of node-local storage facilities and networked storage (as shown). In this deployment, and specifically referring to use of node-local storage facilities, the combination of local storage 191₁₁ (comprising solid state storage SSD 193₁₁ and hard disk storage HDD 194₁₁) with local storage 191_{1M} (comprising solid state storage SSD 193_{1M} and hard disk storage HDD 194_{1M}) is organized so as to form storage pool 190. The storage pool can be accessed via its assigned range of heterogeneous access space 161. In some embodiments, such a storage pool may also include networked storage 186.

As shown, any/all of the computing entities (computing entity E1, computing entity E2, and computing entity EN) are able to receive storage I/O from container-attached storage controller 158, process the I/O (e.g., check for, or verify, or compute, an intended destination). This can happen irrespective of where the computing is done and irrespective of where the computing entity's respective storage devices are located. In certain deployments, container-attached storage controller 158 communicates with the shown metadata service module 185 so as to access cluster metadata 187, and thereby to determine the identity of a particular node of the cluster, which in turn serves to correspond to or otherwise reveal the particular storage device to which the received storage I/O should be redirected.

**FIG. 2A** presents a system 2A00 for implementing a container-attached storage facility in a Kubernetes environment. Any aspect of system 2A00 or any aspect thereof may be implemented in the context of the architecture and functionality of the embodiments described herein and/or in any environment.

FIG. 2A depicts system 2A00 as an arrangement of computing modules that are interconnected so as to operate cooperatively to implement certain of the herein-disclosed embodiments. The partitioning of system 2A00 is merely illustrative and other partitions are possible.

As shown, FIG. 2A depicts an automated system for implementing a container-attached storage facility. The system comprises one or more computer processors to execute a set of program instructions (module 2A10), which program instructions comprise (1) program instructions for identifying a cloud environment that hosts one or more Kubernetes Pods, wherein at least one of the one or more Kubernetes Pods comprises a containerized control module that is situated between a plurality of computing entities and a plurality of heterogeneous storage facilities (module 2A20); (2) program instructions for establishing a common access space over an aggregate of storage capacity of the plurality of heterogeneous storage facilities (module 2A30); (3) program instructions for receiving, by the containerized control module of the Kubernetes environment, an I/O request from at least one of the plurality of computing entities, wherein the I/O request includes an address or range of the common access space (module 2A40); (4) program instructions for redirecting the I/O request to at least one of the heterogeneous storage facilities wherein the address or range of the common access space of the I/O request corresponds to the at least one of the heterogeneous storage facilities (module 2A50); and (5) program instructions for relaying an I/O response from the at least one of the heterogeneous storage facilities back to the at least one of the plurality of computing entities (module 2A60). Any of the foregoing modules comprising program instructions can communicate with any other module over communication facility 2A05.

Variations of the foregoing may include more or fewer of the shown modules. Certain variations may perform more or fewer (or different) steps and/or certain variations may use data elements in more, or in fewer, or in different operations.

Still further, some embodiments include variations in the operations performed, and some embodiments include variations of aspects of the data elements used in the operations.

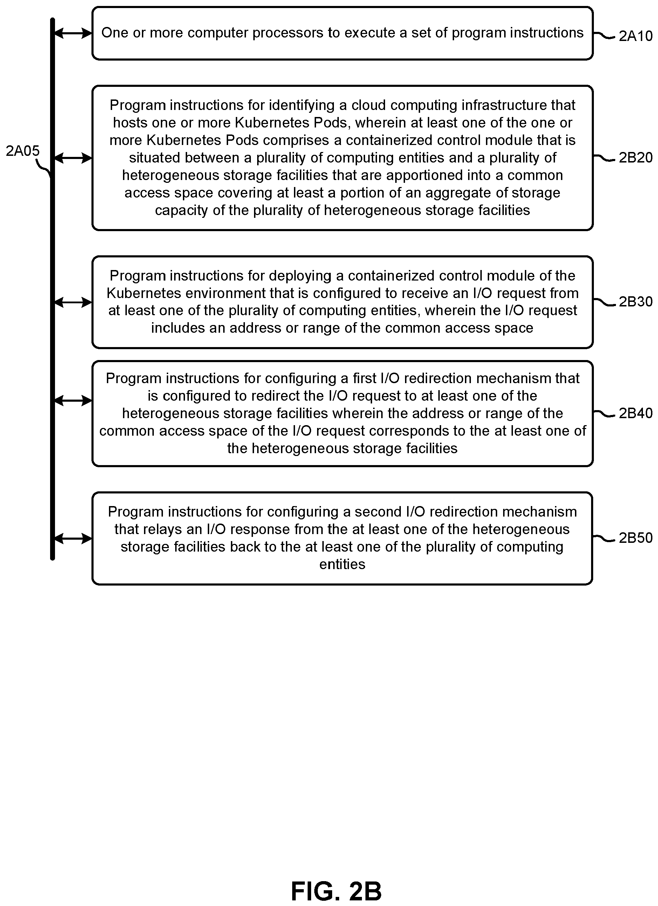

**FIG. 2B** presents a system for handling round-trip I/O redirection, according to an embodiment. The system implements an I/O redirection feature of a container-attached storage facility by one or more computer processors to execute a set of program instructions (module 2A10) for (1) identifying a cloud computing infrastructure that hosts one or more Kubernetes Pods, wherein at least one of the one or more Kubernetes Pods comprises a containerized control module that is situated between a plurality of computing entities and a plurality of heterogeneous storage facilities that are apportioned into a common access space covering at least a portion of an aggregate of storage capacity of the plurality of heterogeneous storage facilities (module 2B20); (2) deploying a containerized control module of the Kubernetes environment that is configured to receive an I/O request from at least one of the plurality of computing entities, wherein the I/O request includes an address or range of the common access space (module 2B30); (3) configuring a first I/O redirection mechanism that is configured to redirect the I/O request to at least one of the heterogeneous storage facilities wherein the address or range of the common access space of the I/O request corresponds to the at least one of the heterogeneous storage facilities (module 2B40); and (4) configuring a second I/O redirection mechanism that relays an I/O response from the at least one of the heterogeneous storage facilities back to the at least one of the plurality of computing entities (module 2B50).

Further details regarding general approaches to handling round-trip I/O redirection are described in U.S. Patent No. 11,438,280 titled "HANDLING IP NETWORK ADDRESSES IN A VIRTUALIZATION SYSTEM".
Further details regarding general approaches for accessing pools of aggregated storage capacity formed of heterogeneous storage facilities are described in U.S. Patent No. 10,838,620 titled "EFFICIENT SCALING OF DISTRIBUTED STORAGE SYSTEMS".

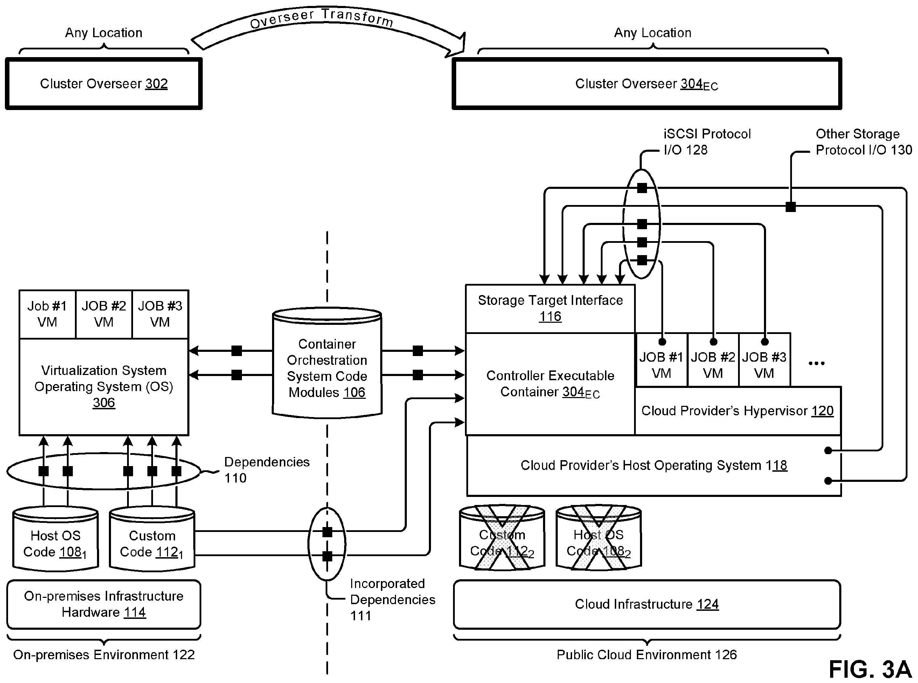

**FIG. 3A** depicts containerization of a cluster overseer. As shown, a cluster overseer 302 is subjected to an overseer transformation so as to result in a containerized cluster overseer 304_{EC}. This can be done using any or all, or parts of, or variations of the containerization techniques heretofore described.

Computing clusters that include multiple nodes often demand management of those nodes, either individually or as a whole. One way to accomplish this in a computing cluster made up of Kubernetes nodes is to containerize an instance of a cluster overseer that derives from a cluster overseer of a virtualization system.

As used herein, a cluster overseer is a computer entity that handles distributed resource management so as to allow users to manage and monitor objects and services of the computing environment. A cluster overseer can be hosted locally, or in the cloud, or both. Example capabilities include (1) handling interfacing to tools and protocols (e.g., HTML5 UI, REST API, CLI, PowerShell commands and/or commandlets, etc.) and (2) cluster component management capabilities (e.g., platform observation, virtual machine and/or container creation, probing, updating and deletion, policy definition establishment and compliance observation, service observations and status/analytics reporting, etc.). Certain implementations of a cluster overseer involve partitionings into multiple components. Strictly as examples, a cluster overseer might involve a multi-cluster manager that provides a single, centralized management interface, while at the same time, any/all of the foregoing handling of distributed resource management is being carried out.

There are many partitionings possible. Strictly as examples, a cluster overseer might be broken out into two concurrently executing components comprising (1) a multi-cluster overseer component (MCO) and (2) a single cluster overseer element (SCO). A multi-cluster overseer component is responsible for managing multiple clusters to provide a single, centralized management facility. In some configurations, a cluster overseer is deployed as a software appliance that can be deployed on any node that hosts an operating system or at least some minimum set of operating system functionality. A single cluster overseer (SCO) provides cluster-local management. It can have a cluster-local user interface (e.g., operated from one of the nodes of a subject cluster), or it can roll-up its findings to an MCO.

For large or multi-zone or otherwise distributed deployments involving more than one cluster or involving multiple sites, an MCO can be configured to provide a single management UI that presents information pertaining all clusters or sites under the MCO's management. In a default configuration, a cluster overseer service (e.g., an MCO or an SCO) is enabled in every control virtual machine (or in an alternative, in every containerized controller). As such, there needs to be a leader, and accordingly there needs to be a leadership election process. This is because the single, one-and-only elected cluster overseer is tasked with the responsibility of handling HTTP requests. It is a default configuration that if the elected cluster overseer leader fails, a new cluster overseer leader will be elected. In the case that a CVM that is not the elected cluster overseer leader receives an HTTP request, its built-in protocol handler will redirect the HTTP request to the then-current cluster overseer leader (e.g., using an HTTP response status code).

In the event of a failure or loss of functionality of a cluster overseer leader, the failed cluster overseer's IP will be assumed by the newly elected cluster overseer leader and a gratuitous address resolution protocol (gARP) will be used to clean-out any stale ARP cache entries.

For security reasons, a cluster overseer may support integrations with any one or more authentication mechanisms. Strictly as examples, an MCO or an SCO provides support for integrations with an active directory, a LDAP, a SAML, and a SAML with multi-factor authentication. Furthermore, a cluster overseer may support integrations with external identity providers (IDP) such as Okta, ADFS, Microsoft Authenticator, etc.

In many settings, a cluster overseer is used by infrastructure administrators to keep track of storage resources (e.g., volume groups (VGs)), policies, disaster recovery (DR) entities, VG-related stats, recovery points (RPs), etc.). This need extends into the Kubernetes domain in the sense that a cluster overseer is needed to observe and control a Kubernetes cluster, including worker nodes statistics and any events or conditions in or over an underlying virtualization system's operating system 306 or containerized embodiment therefrom. A cluster overseer also monitors Kubernetes (or other) Pods, as well as third party or foreign or vendor-specific clusters. Thus, at least in a cloud setting, there is a need to run a cluster overseer natively using regular, non-bare metal (aka "non-metal") instances. Strictly as one example, "running natively" refers to running in an Amazon elastic compute cloud "EC2" setting on a non-metal instance.

In certain envisioned embodiments, an Amazon Web Services (AWS) native cluster overseer can derive from a virtualization system's existing cluster overseer code base. In this situation, the code base of the cluster overseer might be provided in a QEMU copy on write (QCOW) file format for disk image files used by a quick emulator (QEMU), and/or as a hosted virtual machine monitor. In either case, and given application of the techniques disclosed herein, the cluster overseer functionality can be converted to an EC2-compatible Amazon machine image (AMI) and then deployed to run this AMI using a standard non-metal EC2 instance. The cluster overseer can be single- or multi-instance in a standard variety of sizes (e.g., small, medium, large). The same cluster overseer can be used to manage the Amazon elastic Kubernetes service (EKS), based clusters as well as any other type of cluster. The cluster overseer can access storage, including any container microservices platform (CMSP) Pods as well as for cluster overseer accessible local storage, and can be served out of elastic block storage (EBS) disks of any variety or billing model (e.g., GP2 or GP3).

In some situations, it is possible to use a cluster overseer to facilitate disaster recovery (DR), for example, using any variety of a scalable storage service ("S3") for cluster overseer protection (e.g., against availability zone failure). The cluster overseer can be deployed in the customer's virtual private cloud (VPC), similarly as for any of a variety of managed services such as EKS, to run Kubernetes on AWS. As disclosed herein, a cluster overseer can be deployed as a single instance embodiment, or a cluster overseer can be deployed as a scaled-out cluster overseer (running on EC2 instances), either of which in turn can create, manage, and provision multiple computing clusters.

In some cases, the envisioned cluster overseer implements a cloud-borne control and management plane for a hyperconverged computing infrastructure (HCI), regardless of whether the infrastructure is virtualized or is cloud native. As such, there is a need to automatically create a cluster overseer image that can run natively using "regular" (i.e., non-metal) cloud-provided computing instances.

### Component Design Considerations

In some of the envisioned deployments (e.g., AWS deployments), a native cluster overseer system involves the following subcomponents:
1. A cluster overseer imaging system (and possibly a CI/CD system) that converts a QCOW image (of any variety) into an Amazon machine image for seamless integration into AWS. For every successful smoke-tested cluster overseer build, a cluster overseer AMI can be created using appropriate EC2 instances such as "C5.12xlarge" (just as an example). Every cluster overseer size has a specific resource requirement. The selection of the EC2 instance will depend on the cluster overseer resource sizing, and
2. Use of either Terraform scripts or a CloudFormation template for deploying the cluster overseer cluster on an AWS infrastructure and a user-provided VPC. The script can be executed from the AWS marketplace or from a deployment portal hosted on an EC2 instance spun off from an AMI that's made available on the AWS marketplace.

Implications include:
1. Application of any technique can be used to remove dependencies on the module's application programming interfaces (APIs), which might be used to fetch needed resource information such as network cards and subnets. Recent changes in architectures to implement a three-tier cluster overseer capability removes the cluster overseer dependency and provides a pathway for the overseer to be deployed on a public cloud
2. Container storage interface (CSI) driver replacement, which technique replaces any CSI driver with a cloud-supported (e.g., cloud-native) driver that provides persistent storage to CMSP Pods with the AWS EBS CSI driver. This eliminates PE dependency for persistence.
3. Docker modifications: The etcd and registry docker containers, used by CMSP, are standalone, system-managed containers. The etcd and registry require storage, which was previously dynamically provisioned through PE and consumed as a docker volume plug-in. This dependency should be eliminated and instead, use static EBS disks attached to the docker host (EC2 host). The EBS disks can be attached to the docker host during cluster overseer deployment.
4. Once the cluster overseer instance boots up, a call to the cluster overseer agent API serves to initiate the cluster overseer's cluster creation. Various IP tables, networking rules, and assigned ports serve to expose various representational state transfer (REST) APIs as well as other APIs. In various embodiments, the cluster overseer itself and/or its functions can span across multiple AZs and regions.

### Further Considerations

Possible features/capabilities/deployment include use of a single cluster overseer including customer-owned tooling that can manage NC2 virtualized infra and NCS k8s infra using a common console. In this case, it is possible to deploy the cluster overseer from the marketplace or from an interface such as Terraform. Strictly as possibilities, multiple clusters can be listed under the same user interface pane. Further, federation of cluster overseer APIs (e.g., to add worker nodes to an NCS cluster), and/or deployment of a cluster overseer in the context of thin provisioning (e.g., to facilitate using pay-per-use cloud resources for compute and storage can be handled in a manner to facilitate scaling of clusters in multiple independent dimensions. Further, certain embodiments provision an upgrade path to accommodate flexible configuration of fault tolerance features. Strictly as one example, elastic block storage (EBS) disks can be detached/reattached so as to retain state across reboots and upgrades.

### Deployment Modes

One possible mode of deployment is via Terraform, along with an NCS cluster. The cluster overseer deployment module is written in a way that it can also be deployed in a standalone manner. The Terraform cluster overseer module takes care of setting up the following infrastructure:
1. Networking: A deployment can use an existing subnet, or, the user can deploy a new VPC, any required public subnets, route tables and security groups.
2. IAMs: A cluster overseer can implement an IAM role along with the exact required policies.

After the infrastructure deployment, any infrastructure as code tool (e.g., Terraform) runs scripts to bring up the cluster overseer cluster and enable CMSP. Strictly for illustration of the flexibilities of a cluster overseer as herein envisioned, the mode for executing the create cluster involves secure shell (SSH)-ing into the components involved. An alternative mode is to use the cluster overseer agents. To configure the cluster overseer agent, certain ports need to be opened up by modifying the firewall, which can be done after some initial bring-up.

### Upgrading a Deployed PC

One approach involves upgrading the cluster overseer (which is a stateful distributed Kubernetes application) without any downtime. To do so, consider that when a container-attached storage component runs as K8s Pods and exposes storage infrastructure to other applications, then upgrades for container-attached storage component can be handled in a manner that ensures zero downtime (i.e., to avoid downtime for end-user applications that rely on the aforementioned storage). Using this approach, it can be seen that the cluster overseer can be upgraded in a manner that ensures zero downtime for the cluster overseer as well as for end user applications that rely on the aforementioned storage. One particular issue that is specific to cluster overseers is resiliency. That is, given an architecture where there is one cluster overseer per cluster, that one cluster overseer presents a potential single point of failure.

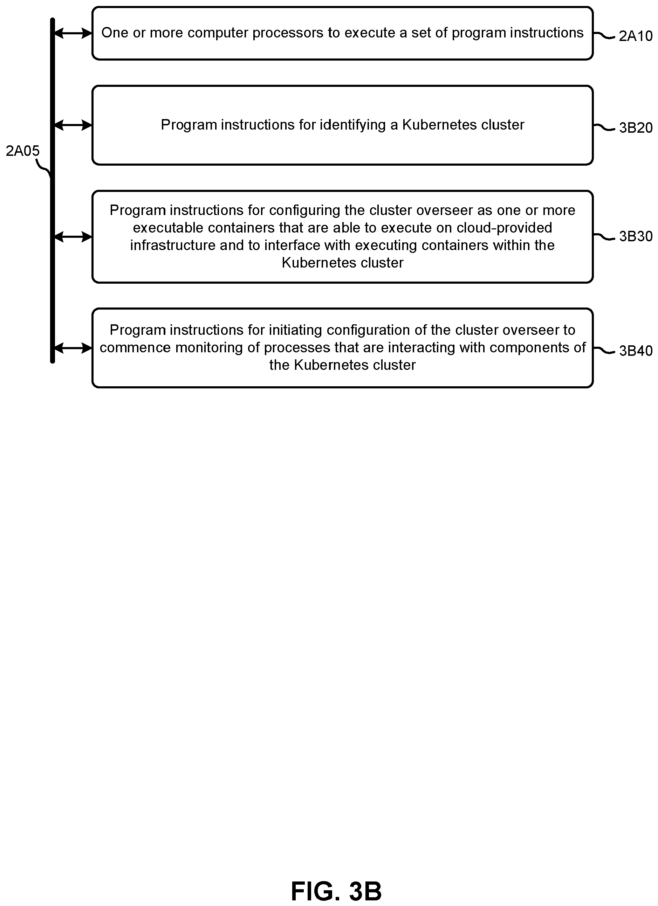

**FIG. 3B** presents a system for configuring a containerized cluster overseer, according to an embodiment. The system includes comprises one or more computer processors to execute a set of program instructions (module 2A10), the program instructions including: program instructions for identifying a Kubernetes cluster (module 3B20); program instructions for configuring the cluster overseer as one or more executable containers that are able to execute on cloud-provided infrastructure and to interface with executing containers within the Kubernetes cluster (module 3B30), and program instructions for initiating configuration of the cluster overseer to commence monitoring of processes that are interacting with components of the Kubernetes cluster (module 3B40).

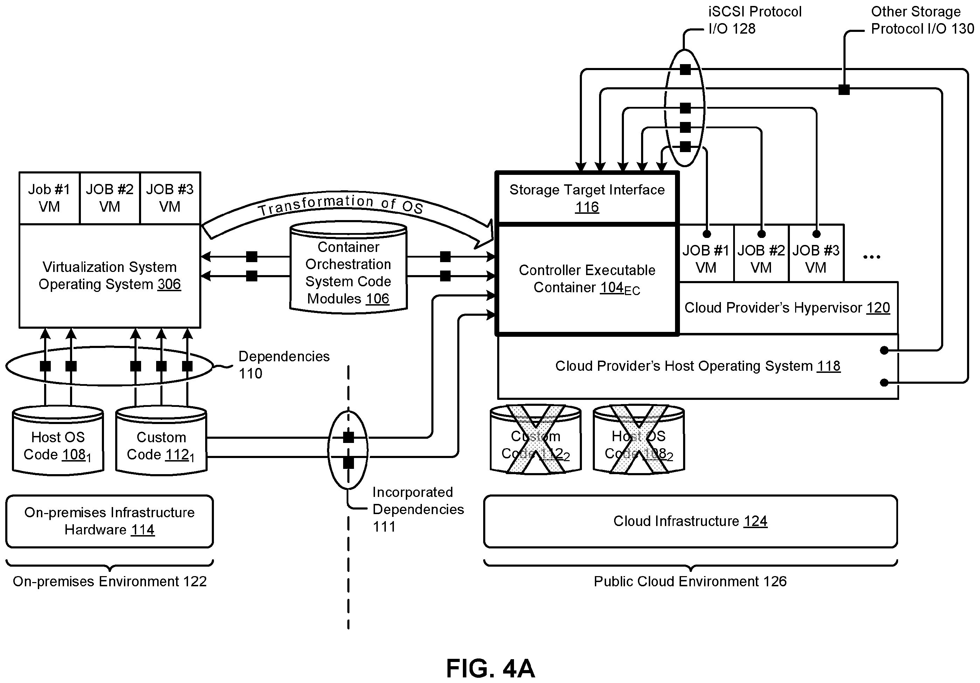

**FIG. 4A** depicts containerization of a virtualization system's operating system 306. A virtualization system's operating system (OS) can be configured with extensive capabilities, many of which are relied upon by higher level computing entities. Strictly as examples, a virtualization system's OS might be configured to initialize and manage initial access to any type of storage device, including direct-attached storage in addition to network-attached and cloud-attached storage. In some cases, a virtualization system's OS implements some portion of logic in user space and some portion of logic in kernel space. With the help of other virtualization system components in a cluster, a virtualization system's OS is able to virtualize any amount of storage hardware as one global resource pool that is high in reliability, availability, and performance. In some cases, IP-based requests are used to send I/O requests to the virtualization system's OS. The virtualization system's OS can then directly implement storage and I/O optimizations (e.g., within a direct data access path), and in some cases without the need for aid from other computing modules.

There are many ways to containerize a virtualization system's OS. Strictly as an illustrative example, techniques involving the Docker method are disclosed hereunder.

### Considerations for Dockerize-ing a Virtualization System's OS

By applying the herein-disclosed transformation techniques, it is possible to run a virtualization system's OS directly as a cloud-native executable, yet without relying on an underlying hypervisor. Strictly as one transformation example, a Docker image can be created from a "gold disk" build image using the docker *import* method. This build image could be in any known format, however for illustrative purposes, the technique below discusses the transformation based on a "gold disk" build image in AMI format. To work with this particular format, the build image is first converted into an EBS volume and attached to an elastic compute cloud (also known as "EC2") instance. Next, a tape archive (e.g., a TAR archive) is created by copying the build image files from the attached EBS volume. Then, using the docker *import* command, the TAR archive is imported to create a Docker base image.

### Running an Operating System Inside Kubernetes

The Docker image that was created in the previous section can be used for the creation of operating system Pods. In order to automate an operating system cluster creation in the Kubernetes environment, a new Kubernetes operator is created, which then creates custom resource definitions (CRDs) for the operating system's cluster. This operator also implements a controller that handles the management and orchestration of the operating system cluster.

Table 1 shows example components/artifacts involved in creating an operating system cluster inside Kubernetes.

**Table 1: A virtualization system's OS operator-implementation considerations**

| **Index** | **Description** |
|---|---|
| 1 | Add custom resource definitions (CRDs) for a virtualization system cluster. A CRD accepts parameters like nodeCount and extra EBSStoragePerNode. This operator does an automated virtualization system cluster deployment. Based on node count and extra EBSStoragePerNode, it deploys CVM Pods and configures a storage class and required PVC objects. |
| 2 | Monitors for changes in cluster configuration and reconciles the current cluster state with the desired state |
| 3 | Monitors Kubernetes Pods (e.g., CVM Pods) and recreates them whenever needed |
| 4 | Just like any other Kubernetes resources, a virtualization system cluster is also persisted in etcd |
| 5 | Implements or fosters visibility and operation of a container network interface (CNI) |
| 6 | Assigns specific static IP addresses to a Pod (e.g., to comport with embodiments where the CVM's IP address is static) |
| 7 | Determines a networking security solution |
| 8 | Eliminates the dependency on CVM IP addresses |
| 9 | Implements an iSCSI data services IP address (DSIP) |
| 10 | Deploys a Kubernetes ClusterIP service that interacts with any deployed operating system Pods (e.g., Kubernetes Pods) and the iSCSI portal |
| 11 | Advertises the container-attached storage interface |

### Running a Virtualization Solution's Operating System without Hypervisor Dependency (CVM Only Node)

As discussed previously, to run an operating system (e.g., a virtualization solution's operating system) natively on Kubernetes, it is felicitous to dockerize the CVM image and eliminate all dependencies on the hypervisor. The operating system stack is designed to operate in a virtualized hyperconverged environment, with CVM running as a VM on top of the AHV hypervisor. The CVM contains significant logic that has hypervisor dependencies, such as fetching active RAID host boot disk information in disk_manager; collecting hardware and hypervisor-specific statistics in sys_stat_collector; modifying network routes in ha_service; managing and publishing stats for CVMs and UVMs; conducting hardware and hypervisor-specific checks; performing network configuration, etc. In generalized cases, it's not possible to run an operating system in a Pod without removing the hypervisor dependencies. To address this challenge, a native CVM or CVM-only node configuration is used. At a high level, a native CVM design implements: (1) a new hypervisor type "kNativeHost" to abstract out the hypervisor specific handling, (2) a customized high-availability service handling, (3) a technique to facilitate identification of a native operating system and or existence of CVM-only nodes, and (4) a new cluster function to include a selected subset of services that are needed in a non-virtualized environment.

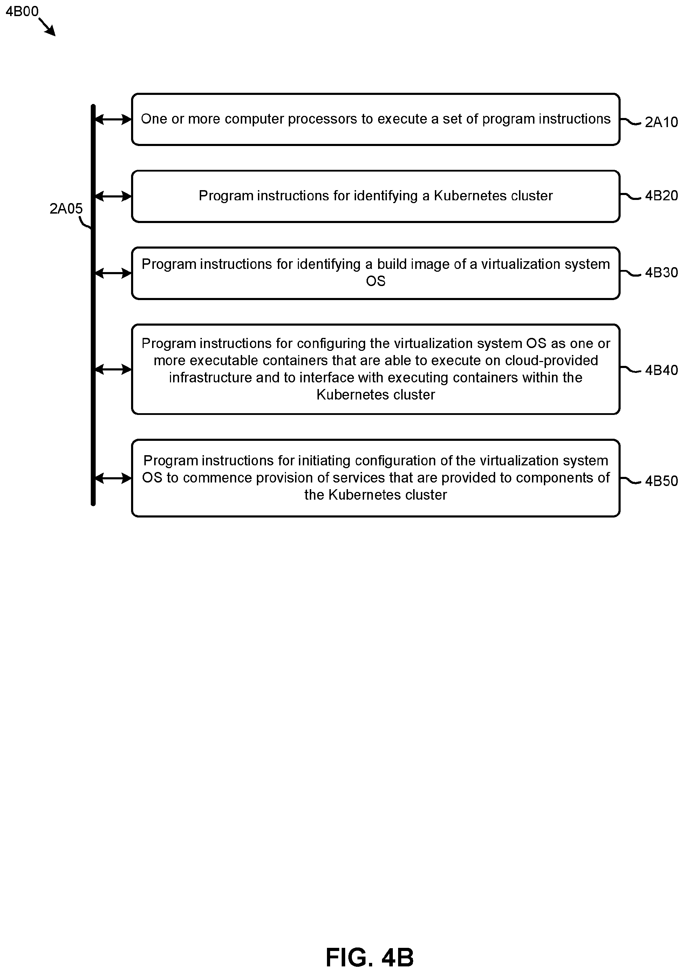

**FIG. 4B** presents a system for containerizing a virtualization system's operating system. The system 4B00 comprises one or more computer processors to execute a set of program instructions (module 2A10), the program instructions for: (1) identifying a Kubernetes cluster (module 4B20), (2) identifying a build image of a virtualization system operating system (module 4B30), (3) configuring the virtualization system OS as one or more executable containers that are able to execute on cloud-provided infrastructure and to interface with executing containers within the Kubernetes cluster (module 4B40), and (4) initiating configuration of the virtualization system OS to commence provision of services that are provided to components of the Kubernetes cluster (module 4B50).

Carrying out the foregoing results in significant capability advances. Table 2 details some of such advances.

**Table 2: Capability advances**

| **Index** | **Description** |
|---|---|
| 1 | An ability to convert an existing qCOW image of a storage controller VM into a container image |
| 2 | An ability to automatically separate stateful and stateless sections of the resultant tar bundle into separate partitions and keep the stateful partitions as independent cloud-native snapshots which are instantiated at runtime when a Pod is spun off |
| 3 | An ability to run all configurations and post startup scripts at build time itself to create the most up-to-date container image to significantly improve the startup time |
| **4** | An ability to dynamically eliminate traditional services which are used in hypervisor interaction and VM management or virtualization workflows, by having a configurable way to start only the most required services when container starts up |
| 5 | An ability to invoke a custom systemctl as a startup process (e.g., to start all the services via systemd in root context) |

### SYSTEM ARCHITECTURE OVERVIEW

### Additional System Architecture Examples

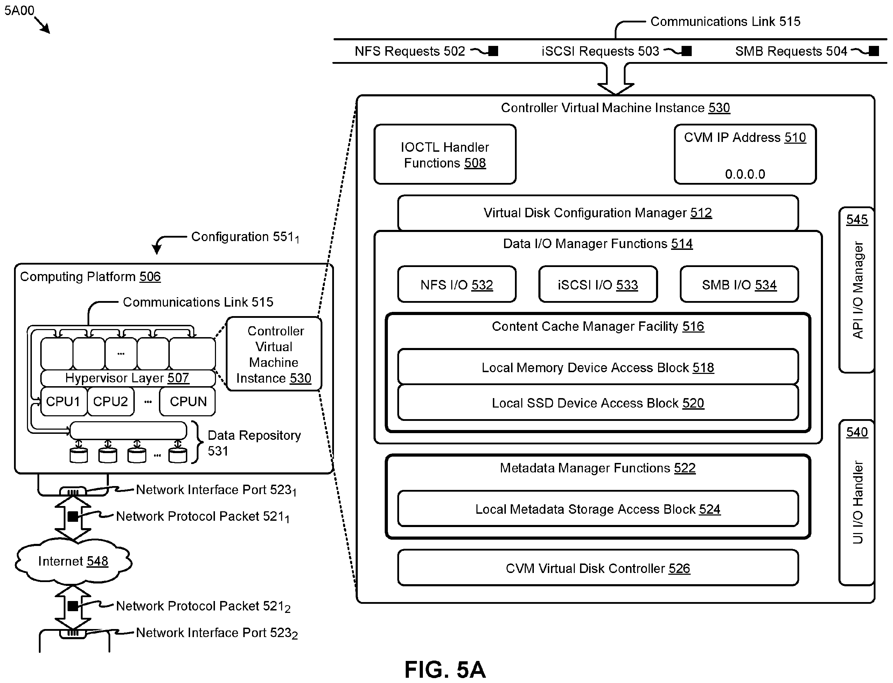

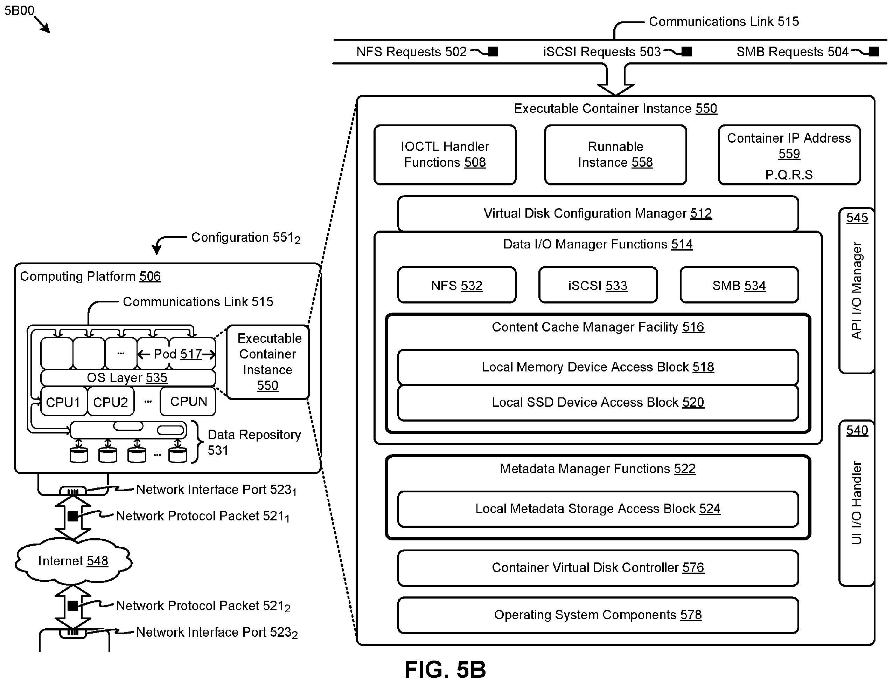

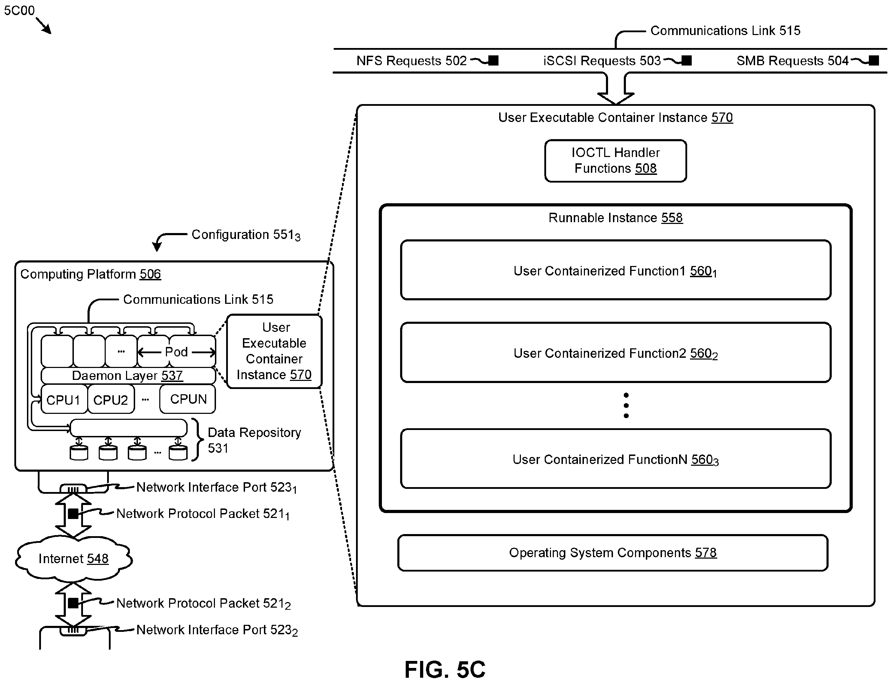

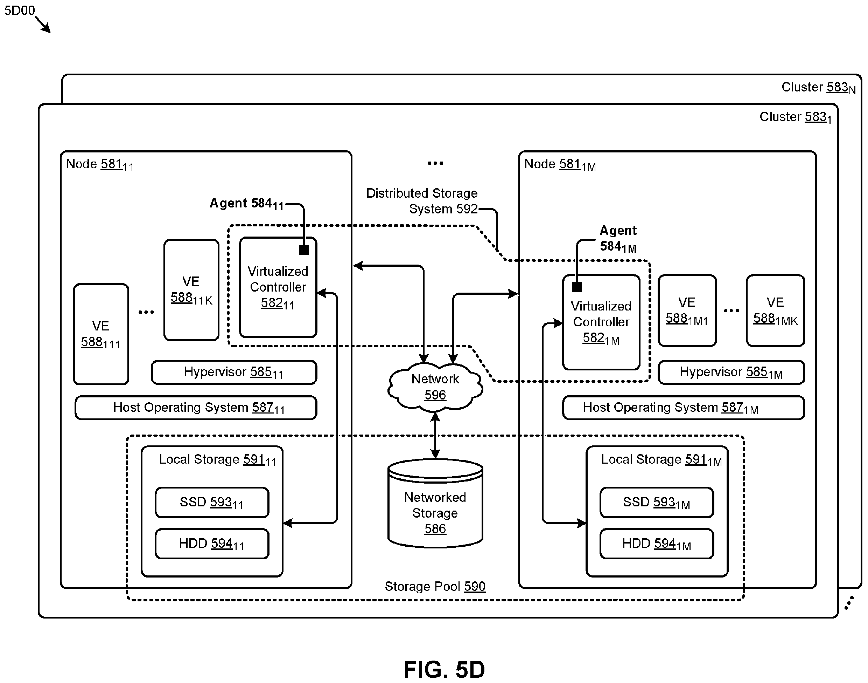

All or portions of any of the foregoing techniques can be partitioned into one or more modules and instanced within, or as, or in conjunction with, a virtualized controller in a virtual computing environment. Some example instances of virtualized controllers situated within various virtual computing environments are shown and discussed as pertains to FIG. 5A, FIG. 5B, FIG. 5C, and FIG. 5D.

FIG. 5A depicts a virtualized controller as implemented in the shown virtual machine architecture 5A00. The heretofore-disclosed embodiments, including variations of any virtualized controllers, can be implemented in distributed systems where a plurality of networked-connected devices communicate and coordinate actions using inter-component messaging.

As used in these embodiments, a virtualized controller is a collection of software instructions that serve to abstract details of underlying hardware or software components from one or more higher-level processing entities. A virtualized controller can be implemented as a virtual machine, as an executable container, or within a layer (e.g., such as hypervisor layer 507). Furthermore, as used in these embodiments, distributed systems are collections of interconnected components that are designed for, or dedicated to, storage operations as well as being designed for, or dedicated to, computing and/or networking operations.

Interconnected components in a distributed system can operate cooperatively to achieve a particular objective such as to provide high-performance computing, high-performance networking capabilities, and/or high-performance storage and/or high-capacity storage capabilities. For example, a first set of components of a distributed computing system can coordinate to efficiently use a set of computational or compute resources, while a second set of components of the same distributed computing system can coordinate to efficiently use the same or a different set of data storage facilities.

A hyperconverged system coordinates the efficient use of compute and storage resources by and between the components of the distributed system. Adding a hyperconverged unit to a hyperconverged system expands the system in multiple dimensions. As an example, adding a hyperconverged unit to a hyperconverged system can expand the system in the dimension of storage capacity while concurrently expanding the system in the dimension of computing capacity and also in the dimension of networking bandwidth. Components of any of the foregoing distributed systems can comprise physically and/or logically distributed autonomous entities.

Physical and/or logical collections of such autonomous entities can sometimes be referred to as nodes. In some hyperconverged systems, computing and storage resources can be integrated into a unit of a node. Multiple nodes can be interrelated into an array of nodes, which nodes can be grouped into physical groupings (e.g., arrays) and/or into logical groupings or topologies of nodes (e.g., spoke-and-wheel topologies, rings, etc.). Some hyperconverged systems implement certain aspects of virtualization. For example, in a hypervisor-assisted virtualization environment, certain of the autonomous entities of a distributed system can be implemented as virtual machines. As another example, in some virtualization environments, autonomous entities of a distributed system can be implemented as executable containers. In some systems and/or environments, hypervisor-assisted virtualization techniques and operating system (OS) virtualization techniques are combined.

As shown, virtual machine architecture 5A00 comprises a collection of interconnected components suitable for implementing embodiments of the present disclosure and/or for use in the herein-described environments. Moreover, virtual machine architecture 5A00 includes a controller virtual machine instance 530 in configuration 551₁ that is further described below as pertaining to implementation of such a controller virtual machine instance 530. Configuration 551₁ supports virtual machine instances that are deployed as user virtual machines, or controller virtual machines or both. Such virtual machines interface with a hypervisor layer (as shown). Some virtual machines are configured to process storage inputs or outputs (I/O or IO) as received from any or every source within the computing platform. An example implementation of such a virtual machine that processes storage I/O is depicted as 530.

In this and other configurations, a controller virtual machine instance receives block I/O storage requests as network file system (NFS) requests in the form of NFS requests 502, and/or internet small computer system interface (iSCSI) block IO requests in the form of iSCSI requests 503, and/or Samba file system (SMB) requests in the form of SMB requests 504. The controller virtual machine (CVM) instance publishes and responds to an internet protocol (IP) address (e.g., CVM IP address 510). Various forms of input and output can be handled by one or more IO control (IOCTL) handler functions (e.g., IOCTL handler functions 508) that interface to other functions such as data IO manager functions 514 and/or metadata manager functions 522. As shown, the data IO manager functions can include communication with virtual disk configuration manager 512 and/or can include direct or indirect communication with any of various block IO functions (e.g., NFS 532, iSCSI 533, SMB 534, etc.).

In addition to block IO functions, configuration 551₁ supports input or output (IO) of any form (e.g., block IO, streaming IO) and/or packet-based IO such as hypertext transport protocol (HTTP) traffic, etc., through either or both of a user interface (UI) handler such as UI IO handler 540 and/or through any of a range of application programming interfaces (APIs), possibly through API IO manager 545.

Communications link 515 can be configured to transmit (e.g., send, receive, signal, etc.) any type of communications packets comprising any organization of data items. The data items can comprise a payload data, a destination address (e.g., a destination IP address) and a source address (e.g., a source IP address), and can include various packet processing techniques (e.g., tunneling), encodings (e.g., encryption), and/or formatting of bit fields into fixed-length blocks or into variable length fields used to populate the payload. In some cases, packet characteristics include a version identifier, a packet or payload length, a traffic class, a flow label, etc. In some cases, the payload comprises a data structure that is encoded and/or formatted to fit into byte or word boundaries of the packet.

In some embodiments, hard-wired circuitry may be used in place of, or in combination with, software instructions to implement aspects of the disclosure. Thus, embodiments of the disclosure are not limited to any specific combination of hardware circuitry and/or software. In embodiments, the term "logic" shall mean any combination of software or hardware that is used to implement all or part of the disclosure.

The term "computer readable medium" or "computer usable medium" as used herein refers to any medium that participates in providing instructions to a data processor for execution. Such a medium may take many forms including, but not limited to, non-volatile media and volatile media. Non-volatile media includes any non-volatile storage medium, for example, solid state storage devices (SSDs) or optical or magnetic disks such as hard disk drives (HDDs) or hybrid disk drives, or random access persistent memories (RAPMs) or optical or magnetic media drives such as paper tape or magnetic tape drives. Volatile media includes dynamic memory such as random access memory. As shown, the detail of controller virtual machine instance 530 includes content cache manager facility 516 that accesses storage locations, possibly including local dynamic random access memory (DRAM) (e.g., through local memory device access block 518) and/or possibly including accesses to local solid state storage (e.g., through local SSD device access block 520).

Common forms of computer readable media include any non-transitory computer readable medium, for example, floppy disk, flexible disk, hard disk, magnetic tape, or any other magnetic medium; compact disk read-only memory (CD-ROM) or any other optical medium; punch cards, paper tape, or any other physical medium with patterns of holes; or any random access memory (RAM), programmable read-only memory (PROM), erasable programmable read-only memory (EPROM), flash memory EPROM (FLASH-EPROM), or any other memory chip or cartridge. Any data can be stored, for example, in any form of data repository 531, which in turn can be formatted into any one or more storage areas, and which can comprise parameterized storage accessible by a key (e.g., a filename, a table name, a block address, an offset address, etc.). Data repository 531 can store any forms of data, and may comprise a storage area dedicated to storage of metadata pertaining to the stored forms of data. In some cases, metadata can be divided into portions. Such portions and/or cache copies can be stored in the storage data repository and/or in a local storage area (e.g., in local DRAM areas and/or in local SSD areas). Such local storage can be accessed using functions provided by local metadata storage access block 524. The data repository 531 can be configured using CVM virtual disk controller 526, which can in turn manage any number or any configuration of virtual disks.

Execution of a sequence of instructions to practice certain embodiments of the disclosure are performed by one or more instances of a software instruction processor, or a processing element such as a central processing unit (CPU) or data processor or graphics processing unit (GPU), or such as any type or instance of a processor (e.g., CPU1, CPU2, ..., CPUN). According to certain embodiments of the disclosure, two or more instances of configuration 551₁ can be coupled by communications link 515 (e.g., backplane, local area network, public switched telephone network, wired or wireless network, etc.) and each instance may perform respective portions of sequences of instructions as may be required to practice embodiments of the disclosure.

The shown computing platform 506 is interconnected to the Internet 548 through one or more network interface ports (e.g., network interface port 523₁ and network interface port 523₂). Configuration 551₁ can be addressed through one or more network interface ports using an IP address. Any operational element within computing platform 506 can perform sending and receiving operations using any of a range of network protocols, possibly including network protocols that send and receive packets (e.g., network protocol packet 521₁ and network protocol packet 521₂).

Computing platform 506 may transmit and receive messages that can be composed of configuration data and/or any other forms of data and/or instructions organized into a data structure (e.g., communications packets). In some cases, the data structure includes program instructions (e.g., application code) communicated through the Internet 548 and/or through any one or more instances of communications link 515. Received program instructions may be processed and/or executed by a CPU as it is received and/or program instructions may be stored in any volatile or non-volatile storage for later execution. Program instructions can be transmitted via an upload (e.g., an upload from an access device over the Internet 548 to computing platform 506). Further, program instructions and/or the results of executing program instructions can be delivered to a particular user via a download (e.g., a download from computing platform 506 over the Internet 548 to an access device).

Configuration 551₁ is merely one sample configuration. Other configurations or partitions can include further data processors, and/or multiple communications interfaces, and/or multiple storage devices, etc. within a partition. For example, a partition can bound a multi-core processor (e.g., possibly including embedded or collocated memory), or a partition can bound a computing cluster having a plurality of computing elements, any of which computing elements are connected directly or indirectly to a communications link. A first partition can be configured to communicate to a second partition. A particular first partition and a particular second partition can be congruent (e.g., in a processing element array) or can be different (e.g., comprising disjoint sets of components).

A cluster is often embodied as a collection of computing nodes that can communicate between each other through a local area network (LAN) and/or through a virtual LAN (VLAN) and/or over a backplane. Some clusters are characterized by assignment of a particular set of the aforementioned computing nodes to access a shared storage facility that is also configured to communicate over the local area network or backplane. In many cases, the physical bounds of a cluster are defined by a mechanical structure such as a cabinet or such as a chassis or rack that hosts a finite number of mounted-in computing units. A computing unit in a rack can take on a role as a server, or as a storage unit, or as a networking unit, or any combination therefrom. In some cases, a unit in a rack is dedicated to provisioning of power to other units. In some cases, a unit in a rack is dedicated to environmental conditioning functions such as filtering and movement of air through the rack and/or temperature control for the rack. Racks can be combined to form larger clusters. For example, the LAN of a first rack having a quantity of 32 computing nodes can be interfaced with the LAN of a second rack having 16 nodes to form a two-rack cluster of 48 nodes. The former two LANs can be configured as subnets, or can be configured as one VLAN. Multiple clusters can communicate between one module to another over a WAN (e.g., when geographically distal) or a LAN (e.g., when geographically proximal).

As used herein, a module can be implemented using any mix of any portions of memory and any extent of hard-wired circuitry including hard-wired circuitry embodied as a data processor. Some embodiments of a module include one or more special-purpose hardware components (e.g., power control, logic, sensors, transducers, etc.). A data processor can be organized to execute a processing entity that is configured to execute as a single process or configured to execute using multiple concurrent processes to perform work. A processing entity can be hardware-based (e.g., involving one or more cores) or software-based, and/or can be formed using a combination of hardware and software that implements logic, and/or can carry out computations and/or processing steps using one or more processes and/or one or more tasks and/or one or more threads or any combination thereof.

Some embodiments of a module include instructions that are stored in a memory for execution so as to facilitate operational and/or performance characteristics pertaining to a containerized virtualization system controller that is addressed via a storage target interface. In some embodiments, a module may include one or more state machines and/or combinational logic used to implement or facilitate the operational and/or performance characteristics pertaining to a containerized virtualization system controller that is addressed via a storage target interface.

Various implementations of the data repository comprise storage media organized to hold a series of records or files such that individual records or files are accessed using a name or key (e.g., a primary key or a combination of keys and/or query clauses). Such files or records can be organized into one or more data structures (e.g., data structures used to implement or facilitate aspects of a containerized virtualization system controller that is addressed via a storage target interface). Such files or records can be brought into and/or stored in volatile or non-volatile memory. More specifically, the occurrence and organization of the foregoing files, records, and data structures improve the way that the computer stores and retrieves data in memory, for example, to improve the way data is accessed when the computer is performing operations pertaining to a containerized virtualization system controller that is addressed via a storage target interface, and/or for improving the way data is manipulated when performing computerized operations pertaining to deploying a cluster node controller as a cloud-native executable container that functions as a storage target.

Further details regarding general approaches to managing data repositories are described in U.S. Patent No. 8,601,473 titled "ARCHITECTURE FOR MANAGING I/O AND STORAGE FOR A VIRTUALIZATION ENVIRONMENT".
Further details regarding general approaches to managing and maintaining data in data repositories are described in U.S. Patent No. 8,549,518 titled "METHOD AND SYSTEM FOR IMPLEMENTING A MAINTENANECE SERVICE FOR MANAGING I/O AND STORAGE FOR A VIRTUALIZATION ENVIRONMENT".

FIG. 5B depicts a virtualized controller implemented by containerized architecture 5B00. The containerized architecture comprises a collection of interconnected components suitable for implementing embodiments of the present disclosure and/or for use in the herein-described environments. Moreover, the shown containerized architecture 5B00 includes an executable container instance 550 in configuration 551₂ that is further described below as pertaining to executable container instance 550. Configuration 551₂ includes an operating system layer (the shown OS layer 535) that performs addressing functions such as providing access to external requestors (e.g., user virtual machines or other processes) via an IP address 559 (e.g., "P.Q.R.S", as shown). Providing access to external requestors can include implementing all or portions of a protocol specification, possibly including the hypertext transport protocol (HTTP or "http:") and/or possibly handling port-specific functions. In this and other embodiments, external requestors (e.g., user virtual machines or other processes) rely on the aforementioned addressing functions to access a virtualized controller for performing all data storage functions. Furthermore, when data input or output requests are received from a requestor running on a first node are received at the virtualized controller on that first node, then in the event that the requested data is located on a second node, the virtualized controller on the first node accesses the requested data by forwarding the request to the virtualized controller running at the second node. In some cases, a particular input or output request might be forwarded again (e.g., an additional or Nth time) to further nodes. As such, when responding to an input or output request, a first virtualized controller on the first node might communicate with a second virtualized controller on the second node, which second node has access to particular storage devices on the second node or, the virtualized controller on the first node may communicate directly with storage devices on the second node.

An operating system layer (e.g., the shown OS layer 535) can perform port forwarding to any executable container (e.g., executable container instance 550). An executable container instance can be executed by a processor. Runnable portions of an executable container instance sometimes derive from an executable container image, which in turn might include all, or portions of any of, a Java archive repository (JAR) and/or its contents, and/or a script or scripts and/or a directory of scripts, and/or a virtual machine configuration, and may include any dependencies therefrom. In some cases, a configuration within an executable container might include an image comprising a minimum set of runnable code. Contents of larger libraries and/or code or data that would not be accessed during runtime of the executable container instance can be omitted from the larger library to form a smaller library composed of only the code or data that would be accessed during runtime of the executable container instance. In some cases, start-up time for an executable container instance can be much faster than start-up time for a virtual machine instance, at least inasmuch as the executable container image might be much smaller than a corresponding virtual machine instance. Furthermore, start-up time for an executable container instance can be much faster than start-up time for a virtual machine instance, at least inasmuch as the executable container image might have many fewer code and/or data initialization steps to perform than a respective virtual machine instance.

An executable container instance can serve as an instance of an application container or as a controller executable container. Any executable container of any sort can be rooted in a directory system and can be configured to be accessed by file system commands (e.g., "ls", "dir", etc.). The executable container might optionally include operating system components 578, however such a separate set of operating system components need not be provided. As an alternative, an executable container can include runnable instance 558, which is built (e.g., through compilation and linking, or just-in-time compilation, etc.) to include any or all of any or all library entries and/or operating system (OS) functions, and/or OS-like functions as may be needed for execution of the runnable instance. In some cases, a runnable instance can be built with a virtual disk configuration manager, any of a variety of data IO management functions, etc. In some cases, a runnable instance includes code for, and access to, container virtual disk controller 576. Such a container virtual disk controller can perform any of the functions that the aforementioned CVM virtual disk controller 526 can perform, yet such a container virtual disk controller does not rely on a hypervisor or any particular host operating system so as to perform its range of functions.

In some environments, multiple executable containers can be collocated and/or can share one or more contexts. For example, multiple executable containers that share access to a virtual disk can be assembled into a Pod 517 (e.g., a Kubernetes Pod). Pods provide sharing mechanisms (e.g., when multiple executable containers are amalgamated into the scope of a Pod) as well as isolation mechanisms (e.g., such that the namespace scope of one Pod does not share the namespace scope of another Pod). In various implementations a Pod represents a set of running or runnable processes. A Pod can be deployed as the lowest level executable unit of a containerized application. As used herein, a Pod that is instanced within a node can be addressed by a local IP address.

FIG. 5C depicts a virtualized controller implemented by a daemon-assisted containerized architecture 5C00. The containerized architecture comprises a collection of interconnected components suitable for implementing embodiments of the present disclosure and/or for use in the herein-described environments. Moreover, the shown daemon-assisted containerized architecture includes a user executable container instance 570 in configuration 551₃ that is further described below as pertaining to user executable container instance 570. Configuration 551₃ includes a daemon layer 537 that performs certain functions of an operating system.

User executable container instance 570 comprises any number of user containerized functions (e.g., user containerized function1 560₁, user containerized function2 560₂, ..., user containerized functionN 560₃). Such user containerized functions can execute autonomously or can be interfaced with or wrapped in a runnable object to create a runnable instance (e.g., runnable instance 558). In some cases, the shown operating system components 578 comprise portions of an operating system, which portions are interfaced with or included in the runnable instance and/or any user containerized functions. In this embodiment of a daemon-assisted containerized architecture, the computing platform 506 might or might not host operating system components other than operating system components 578. More specifically, the shown daemon might or might not host operating system components other than operating system components 578 of user executable container instance 570.

The virtual machine architecture 5A00 of FIG. 5A and/or the containerized architecture 5B00 of FIG. 5B and/or the daemon-assisted containerized architecture 5C00 of FIG. 5C can be used in any combination to implement a distributed platform that contains multiple servers and/or nodes that manage multiple tiers of storage where the tiers of storage might be formed using the shown data repository 531 and/or any forms of network accessible storage. As such, the multiple tiers of storage may include storage that is accessible over communications link 515. Such network accessible storage may include cloud storage or networked storage (NAS) and/or may include all or portions of a storage area network (SAN). Unlike prior approaches, the presently-discussed embodiments permit local storage that is within or directly attached to the server or node to be managed as part of a storage pool. Such local storage can include any combinations of the aforementioned SSDs and/or HDDs and/or RAPMs and/or hybrid disk drives. The address spaces of a plurality of storage devices, including both local storage (e.g., using node-internal storage devices) and any forms of network-accessible storage, are collected to form a storage pool having a contiguous address space.

Significant performance advantages can be gained by allowing the virtualization system to access and utilize local (e.g., node-internal) storage. This is because I/O performance is typically much faster when performing access to local storage as compared to performing access to networked storage or cloud storage. This faster performance for locally attached storage can be increased even further by using certain types of optimized local storage devices such as SSDs or RAPMs, or hybrid HDDs, or other types of high-performance storage devices.

In example embodiments, each storage controller exports one or more block devices or NFS or iSCSI targets that appear as disks to user virtual machines or user executable containers. These disks are virtual since they are implemented by the software running inside the storage controllers. Thus, to the user virtual machines or user executable containers, the storage controllers appear to be exporting a clustered storage appliance that contains some disks. User data (including operating system components) in the user virtual machines resides on these virtual disks.

Any one or more of the aforementioned virtual disks (or "vDisks") can be structured from any one or more of the storage devices in the storage pool. As used herein, the term "vDisk" refers to a storage abstraction that is exposed by a controller virtual machine or container to be used by another virtual machine or container. In some embodiments, the vDisk is exposed by operation of a storage protocol such as iSCSI or NFS or SMB. In some embodiments, a vDisk is mountable. In some embodiments, a vDisk is mounted as a virtual storage device.

In example embodiments, some or all of the servers or nodes run virtualization software. Such virtualization software might include a hypervisor or corresponding computer modules that manages the interactions between the underlying hardware and user virtual machines or containers that run client software.

Distinct from user virtual machines or user executable containers, a special controller virtual machine or a special controller executable container can be used to manage certain storage and I/O activities. Such a special controller virtual machine is referred to as a "CVM", or as a controller executable container, or as a service virtual machine (SVM), or as a service executable container, or as a storage controller. In some embodiments, multiple storage controllers are hosted by multiple nodes. Such storage controllers coordinate within a computing system to form a computing cluster.

The storage controllers are not formed as part of specific implementations of hypervisors. Instead, the storage controllers run above hypervisors on the various nodes and work together to form a distributed system that manages all of the storage resources, including the locally attached storage, the networked storage, and the cloud storage. In example embodiments, the storage controllers run as special virtual machines-above the hypervisors-thus, the approach of using such special virtual machines can be used and implemented within any virtual machine architecture. Furthermore, the storage controllers can be used in conjunction with any hypervisor from any virtualization vendor and/or implemented using any combinations or variations of the aforementioned executable containers in conjunction with any host operating system components.

FIG. 5D depicts a distributed virtualization system in a multi-cluster environment 5D00. The shown distributed virtualization system is configured to be used to implement the herein disclosed techniques. Specifically, the distributed virtualization system of FIG. 5D comprises multiple clusters (e.g., cluster 583₁, ..., cluster 583_{N}) comprising multiple nodes that have multiple tiers of storage in a storage pool. Representative nodes (e.g., node 581₁₁, ..., node 581_{1M}) and storage pool 590 associated with cluster 583₁ are shown. Each node can be associated with one server, multiple servers, or portions of a server. The nodes can be associated (e.g., logically and/or physically) with the clusters. As shown, the multiple tiers of storage include storage that is accessible through a network 596, such as a networked storage 586 (e.g., a storage area network or SAN, network attached storage or NAS, etc.). The multiple tiers of storage further include instances of local storage (e.g., local storage 591₁₁, ..., local storage 591_{1M}). For example, the local storage can be within or directly attached to a server and/or appliance associated with the nodes. Such local storage can include solid state drives (SSD 593₁₁, ..., SSD 593_{1M}), hard disk drives (HDD 594₁₁, ..., HDD 594_{1M}), and/or other storage devices.

As shown, any of the nodes of the distributed virtualization system can implement one or more user virtualized entities (VEs) such as the virtualized entity (VE) instances shown as VE 588₁₁₁, ..., VE 588_{11K}, ..., VE 588_{1M1}, ..., VE 588_{1MK}, and/or a distributed virtualization system can implement one or more virtualized entities that may be embodied as a virtual machines (VM) and/or as an executable container. The VEs can be characterized as software-based computing "machines" implemented in a container-based or hypervisor-assisted virtualization environment that emulates underlying hardware resources (e.g., CPU, memory, etc.) of the nodes. For example, multiple VMs can operate on one physical machine (e.g., node host computer) running a single host operating system (e.g., host operating system 587₁₁, ..., host operating system 587_{1M}), while the VMs run multiple applications on various respective guest operating systems. Such flexibility can be facilitated at least in part by a hypervisor (e.g., hypervisor instance 585₁₁, ..., hypervisor instance 585_{1M}), which hypervisor instances are logically located between the various guest operating systems of the VMs and the host operating system of the physical infrastructure (e.g., node).

As an alternative, executable containers may be implemented at the nodes in an operating system-based virtualization environment or in a containerized virtualization environment. The executable containers comprise groups of processes and/or may use resources (e.g., memory, CPU, disk, etc.) that are isolated from the node host computer and other containers. Such executable containers directly interface with the kernel of the host operating system (e.g., host operating system 587₁₁, ..., host operating system 587_{1M}) without, in most cases, a hypervisor layer. This lightweight implementation can facilitate efficient distribution of certain software components, such as applications or services (e.g., micro-services). Any node of a distributed virtualization system can implement both a hypervisor-assisted virtualization environment and a container virtualization environment for various purposes. Also, any node of a distributed virtualization system can implement any one or more types of the foregoing virtualized controllers so as to facilitate access to storage pool 590 by the VMs and/or the executable containers.

Multiple instances of such virtualized controllers can coordinate within a cluster to form the distributed storage system 592 which can, among other operations, manage the storage pool 590. This architecture further facilitates efficient scaling in multiple dimensions (e.g., in a dimension of computing power, in a dimension of storage space, in a dimension of network bandwidth, etc.).

A particularly-configured instance of a virtual machine at a given node can be used as a virtualized controller in a hypervisor-assisted virtualization environment to manage storage and I/O (input/output or IO) activities of any number or form of virtualized entities. For example, the virtualized entities at node 581₁₁ can interface with a controller virtual machine (e.g., virtualized controller 582₁₁) through hypervisor instance 585₁₁ to access data of storage pool 590. In such cases, the controller virtual machine is not formed as part of specific implementations of a given hypervisor. Instead, the controller virtual machine can run as a virtual machine above the hypervisor at the various node host computers. When the controller virtual machines run above the hypervisors, varying virtual machine architectures and/or hypervisors can operate with the distributed storage system 592. For example, a hypervisor at one node in the distributed storage system 592 might correspond to software from a first vendor, and a hypervisor at another node in the distributed storage system 592 might correspond to a second software vendor. As another virtualized controller implementation example, executable containers can be used to implement a virtualized controller (e.g., virtualized controller 582_{1M}) in an operating system virtualization environment at a given node. In this case, for example, the virtualized entities at node 581_{1M} can access the storage pool 590 by interfacing with a controller container (e.g., virtualized controller 582_{1M}) through hypervisor instance 585_{1M} and/or the kernel of host operating system 587_{1M}.

In certain embodiments, one or more instances of an agent can be implemented in the distributed storage system 592 to facilitate the herein disclosed techniques. Specifically, agent 584₁₁ can be implemented in the virtualized controller 582₁₁, and agent 584_{1M} can be implemented in the virtualized controller 582_{1M}. Such instances of the virtualized controller can be implemented in any node in any cluster. Actions taken by one or more instances of the virtualized controller can apply to a node (or between nodes), and/or to a cluster (or between clusters), and/or between any resources or subsystems accessible by the virtualized controller or their agents.

Solutions attendant to deploying a cluster node controller as a cloud-native executable container that functions as a storage target can be brought to bear through implementation of any one or more of the foregoing techniques. Moreover, any aspect or aspects of providing cloud-native storage and self-service tools with centralized data management in a Kubernetes environment can be implemented in the context of the foregoing environments.

In the foregoing specification, the disclosure has been described with reference to specific embodiments thereof. It will, however, be evident that various modifications and changes may be made thereto without departing from the broader spirit and scope of the disclosure. For example, the above-described process flows are described with reference to a particular ordering of process actions. However, the ordering of many of the described process actions may be changed without affecting the scope or operation of the disclosure. The specification and drawings are to be regarded in an illustrative sense rather than in a restrictive sense.

## Claims

1. A method for operating a container-attached storage facility comprising:
situating a cloud-resident containerized control module situated in a Kubernetes Pod; and
associating a plurality of storage devices into a common access space that is accessible by the cloud-resident containerized control module,
wherein, responsive to receiving a storage I/O request referencing a portion of storage addressable by the common access space, the cloud-resident containerized control module redirects the storage I/O request to a storage device of the common access space.

2. The method of claim 1, wherein storage I/O is redirected at least one instance of the storage devices of the common access space.

3. The method of claim 1 or 2, wherein at least one instance of the storage devices of the common access space is situated in at least one of, an on-premises environment, or a third-party environment.

4. The method of any of claims 1-3, wherein the storage I/O request referencing a portion of storage addressable in the common access space is translated into a long-haul I/O.

5. The method of any of claims 1-4 wherein storage I/O is redirected to at least one instance of the storage devices of the common access space forms a cloud-provided block storage facility.

6. The method of any of claims 1-5, wherein at least one instance of the storage devices of the common access space is situated in at least one of, an on-premises environment, or a third-party environment.

7. The method of any of claims 1-6, wherein the storage I/O request referencing a portion of storage addressable in the common access space is redirected to a storage pool formed of node-local storage facilities.

8. The method of any of claims 1-7 further comprising an external locator service that stores metadata pertaining to the node-local storage facilities that form the storage pool.

9. The method of any of claims 1-8, wherein the storage I/O request referencing a portion of storage addressable by the common access space is translated from a first protocol into a second protocol.

10. The method of any of claims 1-9, wherein the first protocol is iSCSI and the second protocol is SONET.

11. The method of any of claims 1-10, wherein storage I/O is redirected at least one instance of the storage devices of the common access space.

12. The method of any of claims 1-11, wherein at least one instance of the storage devices of the common access space is situated in at least one of, an on-premises environment, or a third-party environment.

13. The method of any of claims 1-12, further comprising an external locator service that stores metadata pertaining to the node-local storage facilities that form the storage pool.

14. A system comprising a container-attached storage facility using the method of any of claims 1-13.

15. A computer readable medium having stored thereon a sequence of instructions which, when stored in memory and executed by a processor cause the processor to perform the method of any of claims 1-13.
